(19) Europäisches Patentamt
European Patent Office
Office européen des brevets

(11) **EP 3 125 012 A1**

(12) **EUROPEAN PATENT APPLICATION**
published in accordance with Art. 153(4) EPC

(43) Date of publication:
**01.02.2017 Bulletin 2017/05**

(21) Application number: **15770419.8**

(22) Date of filing: **26.03.2015**

(51) Int Cl.:
**G02B 15/20** *(2006.01)*    **G02B 13/18** *(2006.01)*

(86) International application number:
**PCT/JP2015/001719**

(87) International publication number:
**WO 2015/146177 (01.10.2015 Gazette 2015/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **27.03.2014 JP 2014067081**

(71) Applicant: **Nikon Corporation
Tokyo 108-6290 (JP)**

(72) Inventor: **KIMURA, Yoko
Tokyo 108-6290 (JP)**

(74) Representative: **Hoffmann Eitle
Patent- und Rechtsanwälte PartmbB
Arabellastraße 30
81925 München (DE)**

(54) **ZOOM LENS, IMAGING DEVICE, AND ZOOM LENS PRODUCTION METHOD**

(57)    The art has, disposed in order from an object, a first lens group (G1) having negative refractive power, a second lens group (G2) having positive refractive power, a third lens group (G3) having negative refractive power, and a fourth lens group (G4) having positive refractive power, in which zooming is made by varying air distances between the lens groups, respectively, the first lens group (G1) has, on a side closest to the object, a negative meniscus lens (L11) having a convex surface facing the object, at least a part of the first to fourth lens groups (G1 to G4) is provided to be movable, as a vibration-proof lens group for correcting an image blur, so as to have a component in a direction perpendicular to an optical axis, the fourth lens group (G4) has at least four lenses, and the following conditional expression (1) is satisfied:

$$0.20 < fw/f2 < 0.55 \ ... \ (1)$$

where fw denotes a focal length of the zoom lens in a wide-angle end state, and
f2 denotes a focal length of the second lens group (G2).

FIG.1

Printed by Jouve, 75001 PARIS (FR)

**Description**

TECHNICAL FIELD

The present invention relates to a zoom lens, an imaging device and a method for manufacturing the zoom lens.

TECHNICAL BACKGROUND

Proposals have so far been made on a large number of negative preceding type four-group zoom lenses, in which a bright lens provided with a vibration-proof function is significantly limited (see Patent Documents 1 and 2, for example).

PRIOR ARTS LIST

PATENT DOCUMENT

Patent Document 1: Japanese Laid-Open Patent Publication No. H10-39210(A)
Patent Document 2: Japanese Laid-Open Patent Publication No. 2010-170063(A)

SUMMARY OF THE INVENTION

PROBLEMS TO BE SOLVED BY THE INVENTION

As a result of recent progress of digitalization, while a zoom lens is provided with a vibration-proof function, a brighter zoom lens having higher lens performance has been required.

MEANS TO SOLVE THE PROBLEMS

A zoom lens according to a first aspect of the invention has, disposed in order from an object, a first lens group having negative refractive power, a second lens group having positive refractive power, a third lens group having negative refractive power, and a fourth lens group having positive refractive power, in which zooming is made by varying air distances between the lens groups, respectively, the first lens group has, on a side closest to the object, a negative meniscus lens having a convex surface facing the object, at least a part of the first lens group to the fourth lens group is provided to be movable, as a vibration-proof lens group for correcting an image blur, so as to have a component in a direction perpendicular to an optical axis, the fourth lens group has at least four lenses, and the following conditional expression is satisfied:

$$0.20 < fw/f2 < 0.55$$

where fw denotes a focal length of the zoom lens in a wide-angle end state, and
f2 denotes a focal length of the second lens group.

An imaging device according to a first aspect of the invention is provided with the zoom optical system (zoom lens) according to the first aspect of the invention.
A zoom lens according to a second aspect of the invention has, disposed in order from an object, a first lens group having negative refractive power, a second lens group having positive refractive power, a third lens group having negative refractive power, and a fourth lens group having positive refractive power, in which zooming is made by varying air distances between the lens groups, respectively, the first lens group has a negative meniscus lens on a side closest to the object, at least a part of the first lens group to the fourth lens group is provided to be movable, as a vibration-proof lens group for correcting an image blur, so as to have a component in a direction perpendicular to an optical axis, the fourth lens group has at least three lenses, and the following conditional expression is satisfied:

$$1.00 < (ft/fw)/Fw < 2.00$$

where fw denotes a focal length of the zoom lens in a wide-angle end state,
ft denotes a focal length of the zoom lens in a telephoto end state, and
Fw denotes an open F-number in the wide-angle end state.

An imaging device according to a second aspect of the invention is provided with the zoom optical system according to the second aspect of the invention.

A method for manufacturing a zoom lens according to a first aspect of the invention refers to the method including, disposed in order from an object, a first lens group having negative refractive power, a second lens group having positive refractive power, a third lens group having negative refractive power, and a fourth lens group having positive refractive power, in which each lens is arranged within a lens barrel in such a manner that zooming is made by varying air distances between the lens groups, respectively, the first lens group has, on a side closest to the object, a negative meniscus lens having a convex surface facing the object, at least a part of the first lens group to the fourth lens group is provided to be movable, as a vibration-proof lens group for correcting an image blur, so as to have a component in a direction perpendicular to an optical axis, the fourth lens group has at least four lenses, and the following conditional expression is satisfied:

$$0.20 < fw/f2 < 0.55$$

where fw denotes a focal length of the zoom lens in a wide-angle end state, and
f2 denotes a focal length of the second lens group.

A method for manufacturing a zoom lens refers to the method including, disposed in order from an object, a first lens group having negative refractive power, a second lens group having positive refractive power, a third lens group having negative refractive power, and a fourth lens group having positive refractive power, in which each lens is arranged within a lens barrel in such a manner that zooming is made by varying air distances between the lens groups, respectively, the first lens group has a negative meniscus lens on a side closest to the object, at least a part of the first lens group to the fourth lens group is provided to be movable, as a vibration-proof lens group for correcting an image blur, so as to have a component in a direction perpendicular to an optical axis, the fourth lens group has at least three lenses, and the following conditional expression is satisfied:

$$1.00 < (ft/fw)/Fw < 2.00$$

where fw denotes a focal length of the zoom lens in a wide-angle end state,
ft denotes a focal length of the zoom lens in a telephoto end state, and
Fw denotes an open F-number in the wide-angle end state.

BRIEF DESCRIPTION OF THE DRAWINGS

FIG. 1 is a cross-sectional view showing a lens configuration of a zoom lens according to Example 1.
FIGS. 2A and 2B are graphs showing aberrations of the zoom lens according to Example 1 in a wide-angle end state (f = 9.20), in which FIG. 2A is graphs showing various aberrations upon focusing on infinity and FIG. 2B is graphs showing coma aberration when an image blur is corrected (a vibration-proof lens group shift amount = 0.154) upon focusing on infinity.
FIG. 3 is graphs showing various aberrations of the zoom lens according to Example 1 in a first intermediate focal length state (f = 13.40).
FIG. 4 is graphs showing various aberrations of the zoom lens according to Example 1 in a second intermediate focal length state (f = 18.40) upon focusing on infinity.
FIGS. 5A and 5B are graphs showing aberrations of the zoom lens according to Example 1 in a telephoto end state (f = 29.20), in which FIG. 5A is graphs showing various aberrations upon focusing on infinity and FIG. 5B is graphs showing coma aberration when an image blur is corrected (a vibration-proof lens group shift amount = 0.187) upon focusing on infinity.
FIG. 6 is a cross-sectional view showing a lens configuration of a zoom lens according to Example 2.
FIGS. 7A and 7B are graphs showing aberrations of the zoom lens according to Example 2 in a wide-angle end state (f = 9.20), in which FIG. 7A is graphs showing various aberrations upon focusing on infinity and FIG. 7B is graphs showing coma aberration when an image blur is corrected (a vibration-proof lens group shift amount = 0.116) upon focusing on infinity.

FIG. 8 is graphs showing various aberrations of the zoom lens according to Example 2 in a first intermediate focal length state (f = 13.12) upon focusing on infinity.

FIG. 9 is graphs showing various aberrations of the zoom lens according to Example 2 in a second intermediate focal length state (f = 20.04) upon focusing on infinity.

FIGS. 10A and 10B are graphs showing aberrations of the zoom lens according to Example 2 in a telescopic end state (f = 29.20), in which FIG. 10A is graphs showing various aberrations upon focusing on infinity and FIG. 10B is graphs showing coma aberration when an image blur is corrected (a vibration-proof lens group shift amount = 0.162) upon focusing on infinity.

FIG. 11 is a cross-sectional view showing a lens configuration of a zoom lens according to Example 3.

FIGS. 12A and 12B are graphs showing aberrations of the zoom lens according to Example 3 in a wide-angle end state (f = 9.20), in which FIG. 12A is graphs showing various aberrations upon focusing on infinity and FIG. 12B is graphs showing coma aberration when an image blur is corrected (a vibration-proof lens group shift amount = 0.127) upon focusing on infinity.

FIG. 13 is graphs showing various aberrations of the zoom lens according to Example 3 in a first intermediate focal length state (f = 12.63) upon focusing on infinity.

FIG. 14 is graphs showing various aberrations of the zoom lens according to Example 3 in a second intermediate focal length (f = 17.73) upon focusing on infinity.

FIGS. 15A and 15B are graphs showing aberrations of the zoom lens according to Example 3 in a telescopic end state (f = 29.20), in which FIG. 15A is graphs showing various aberrations upon focusing on infinity and FIG. 15B is graphs showing coma aberration when an image blur is corrected (a vibration-proof lens group shift amount = 0.162) upon focusing on infinity.

FIG. 16 is a substantial cross-sectional view showing a configuration of a camera according to each of first and second embodiments.

FIG. 17 is a flowchart for describing a method for manufacturing a zoom lens according to a first embodiment.

FIG. 18 is a flowchart for describing a method for manufacturing a zoom lens according to a second embodiment.

## DESCRIPTION OF THE EMBODIMENTS

Hereinafter, first and second embodiments will be described with reference to drawings.

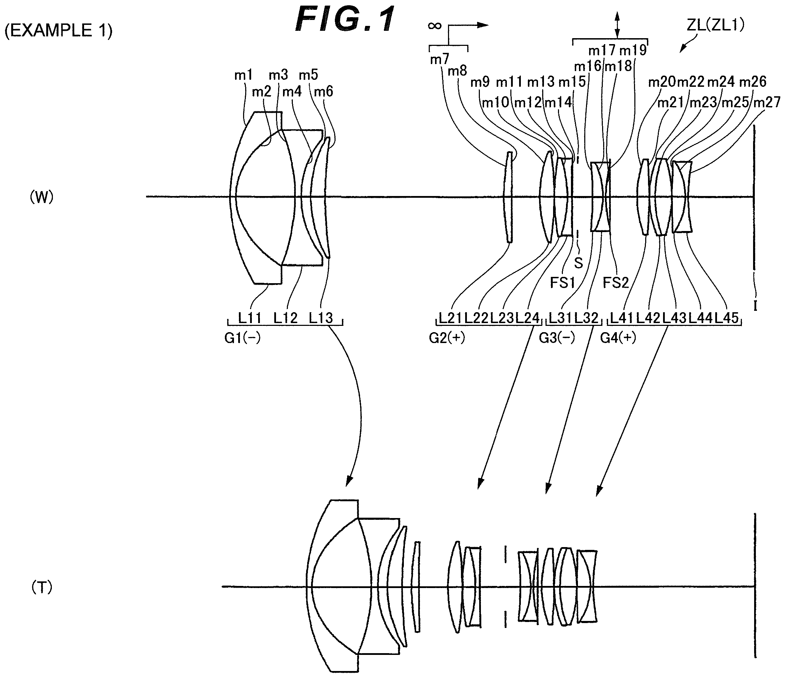

As shown in FIG. 1, for example, a zoom lens ZL according to the first embodiment is configured by having, disposed in order from an object, a first lens group G1 having negative refractive power, a second lens group G2 having positive refractive power, a third lens group G3 having negative refractive power, and a fourth lens group G4 having positive refractive power, in which zooming is made by varying air distances between the lens groups, respectively, the first lens group G1 has, on a side closest to the object, a negative meniscus lens L11 having a convex surface facing the object, at least a part of the first lens group G1 to the fourth lens group G4 is provided to be movable, as a vibration-proof lens group for correcting an image blur, so as to have a component in a direction perpendicular to an optical axis, and the fourth lens group G4 has at least four lenses.

The zoom lens ZL according to the first embodiment has a negative preceding type four-group configuration. In such a zoom lens ZL, successful aberration correction (for example, distortion and curvature of field) can be made in a wide-angle end state by arranging the negative meniscus lens L11 having the convex surface facing the object, on a side closest to the object in the first lens group G1.

In the zoom lens ZL according to the first embodiment, both vibration-proof performance and optical performance can be successfully ensured by providing at least a part of the first lens group G1 to the fourth lens group G4 to be movable, as the vibration-proof lens group for correcting the image blur, so as to have the component in the direction perpendicular to the optical axis.

In the zoom lens ZL according to the first embodiment, an F-number can be ensured and successful aberration correction (for example, spherical aberration and curvature of field) can be made by configuring the fourth lens group G4 with four or more lenses.

As shown in FIG. 1, for example, a zoom lens ZL according to a second embodiment is configured by having, disposed in order from an object, a first lens group G1 having negative refractive power, a second lens group G2 having positive refractive power, a third lens group G3 having negative refractive power, and a fourth lens group G4 having positive refractive power, in which zooming is made by varying air distances between the lens groups, respectively, and the first lens group G1 has a negative meniscus lens L11 on a side closest to the object, at least a part of the first lens group G1 to the fourth lens group G4 is provided to be movable, as the vibration-proof lens group for correcting the image blur, so as to have the component in the direction perpendicular to the optical axis, and the fourth lens group G4 has at least three lenses.

Thus, in the zoom lens having the negative preceding type four-group configuration, successful aberration correction (for example, distortion and curvature of field) can be made in the wide-angle end state by arranging the negative meniscus lens L11 having the convex surface facing the object, on the side closest to the object, in the first lens group G1.

In the zoom lens ZL according to the second embodiment, both vibration-proof performance and optical performance can be successfully ensured by providing at least a part of the first lens group G1 to the fourth lens group G4 to be movable, as the vibration-proof lens group for correcting the image blur, so as to have the component in the direction perpendicular to the optical axis.

In the zoom lens ZL according to the second embodiment, the F-number can be ensured and successful aberration correction (for example, spherical aberration and curvature of field) can be made by configuring the fourth lens group G4 with at least three lenses.

The zoom lenses ZL according to the first and second embodiments each satisfy the following conditional expression (1) :

$$0.20 < fw/f2 < 0.55 \text{ … (1)}$$

where fw denotes a focal length of the zoom lens in the wide-angle end state, and
f2 denotes a focal length of the second lens group G2.

The conditional expression (1) represents a relational expression between the focal length of the zoom lens in the wide-angle end state, and the focal length of the second lens group G2 to determine optimum power of the second lens group G2. If the ratio thereof is more than an upper limit of the conditional expression (1), power of the second lens group G2 relatively and excessively increases, resulting in insufficiency of correction of coma aberration. If the ratio thereof is less than a lower limit of the conditional expression (1), power of the second lens group G2 is relatively and excessively reduced, resulting in insufficiency of correction of spherical aberration, and enlargement of a lens system.

In order to further ensure an effect of each embodiment, the upper limit of the conditional expression (1) is preferably set to 0.50. In order to still further ensure the effect of each embodiment, the upper limit of the conditional expression (1) is preferably set to 0.45. In order to exhibit the effect of each embodiment to a maximum, the upper limit of the conditional expression (1) is preferably set to 0.40.

In order to further ensure the effect of each embodiment, the lower limit of the conditional expression (1) is preferably set to 0.25. In order to exhibit the effect of each embodiment to the maximum, the lower limit of the conditional expression (1) is preferably set to 0.30.

The zoom lenses ZL according to the first and second embodiments each satisfy the following conditional expression (2) :

$$1.00 < (ft/fw)/Fw < 2.00 \text{ … (2)}$$

where fw denotes a focal length of the zoom lens in the wide-angle end state,
ft denotes a focal length of the zoom lens in a telephoto end state, and
Fw denotes an open F-number in the wide-angle end state.

The conditional expression (2) represents a relational expression between a zoom ratio and the F-number in the wide-angle end state to determine an optimum specification of the zoom lenses ZL according to the first and second embodiments. If the ratio thereof is more than an upper limit of the conditional expression (2), the F-number is excessively reduced (giving excessive brightness), and correction of spherical aberration becomes difficult. Moreover, securement of the zoom ratio becomes difficult. Here, if an attempt is made on forcibly ensuring the zoom ratio, in particular, correction of curvature of field and coma aberration becomes difficult. If the ratio thereof is less than a lower limit of the conditional expression (2), the F-number increases (giving darkness) or the zoom ratio becomes small, and therefore becomes far from an attractive lens.

In order to further ensure the effect of each embodiment, the upper limit of the conditional expression (2) is preferably set to 1.90. In order to exhibit the effect of each embodiment to the maximum, the upper limit of the conditional expression (2) is preferably set to 1.80.

In order to exhibit the effect of each embodiment to the maximum, the lower limit of the conditional expression (2) is preferably set to 1.10.

In the zoom lenses ZL according to the first and second embodiments, at least a part of the third lens group G3 is preferably provided to be movable, as the vibration-proof lens group, so as to have the component in the direction perpendicular to the optical axis.

According to this configuration, variations in coma aberration upon correcting the image blur can be successfully suppressed. Moreover, size reduction of the lens system can be achieved.

The zoom lenses ZL according to the first and second embodiments each preferably satisfy the following conditional expression (3):

$$0.90 < ft/f2 < 1.50 \ldots (3)$$

where ft denotes a focal length of the zoom lens in the telephoto end state, and
f2 denotes a focal length of the second lens group G2.

The conditional expression (3) represents a relational expression between the focal length of the zoom lens in the telescopic end state, and the focal length of the second lens group G2 to determine optimum power of the second lens group G2. If the ratio thereof is more than an upper limit of the conditional expression (3), power of the second lens group G2 relatively and excessively increases, resulting in insufficiency of correction of coma aberration. If the ratio thereof is less than a lower limit of the conditional expression (3), power of the second lens group G2 is relatively and excessively reduced, resulting in insufficiency of correction of spherical aberration, and enlargement of the lens system.

In order to further ensure the effect of each embodiment, the upper limit of the conditional expression (3) is preferably set to 1.40. In order to exhibit the effect of each embodiment to the maximum, the upper limit of the conditional expression (3) is preferably set to 1.30.

In order to further ensure the effect of each embodiment, the lower limit of the conditional expression (3) is preferably set to 0.95. In order to exhibit the effect of each embodiment to the maximum, the lower limit of the conditional expression (3) is preferably set to 1.00.

The zoom lenses ZL according to the first and second embodiments each preferably satisfy the following conditional expression (4):

$$0.50 < (-f1)/f2 < 0.80 \ldots (4)$$

where f1 denotes a focal length of the first lens group G1, and
f2 denotes a focal length of the second lens group G2.

The conditional expression (4) represents a relational expression between the focal length of the first lens group G1, and the focal length of the second lens group G2 to determine an optimum specification of the zoom lens ZL according to each embodiment. If the ratio thereof is more than an upper limit of the conditional expression (4), power of the first lens group G1 is relatively and excessively reduced, resulting in deterioration in optical performance in the wide-angle end state (particularly, coma aberration and distortion) . If the ratio thereof is less than a lower limit of the conditional expression (4), power of the first lens group G1 relatively and excessively increases, resulting in insufficiency of correction of coma aberration and distortion.

In order to further ensure the effect of each embodiment, the upper limit of the conditional expression (4) is preferably set to 0.75. In order to exhibit the effect of each embodiment to the maximum, the upper limit of the conditional expression (4) is preferably set to 0.70.

In order to further ensure the effect of each embodiment, the lower limit of the conditional expression (4) is preferably set to 0.55. In order to exhibit the effect of each embodiment to the maximum, the lower limit of the conditional expression (4) is preferably set to 0.60.

The zoom lenses ZL according to the first and second embodiments each preferably satisfy the following conditional expression (5):

$$0.80 < (f2/-f3) < 1.20 \ldots (5)$$

where f2 denotes a focal length of the second lens group G2, and
f3 denotes a focal length of the third lens group G3.

The conditional expression (5) represents a relational expression between the focal length of the second lens group G2, and the focal length of the third lens group G3 to determine an optimum specification of the zoom lens ZL according to each embodiment. If the ratio thereof is more than an upper limit of the conditional expression (5), power of the second lens group G2 is relatively and excessively reduced, resulting in insufficiency of correction of spherical aberration and curvature of field. If the ratio thereof is less than a lower limit of the conditional expression (5), power of the second lens group G2 relatively increases, resulting in insufficiency of correction of spherical aberration and curvature of field.

In order to further ensure the effect of each embodiment, the upper limit of the conditional expression (5) is preferably set to 1.10. In order to exhibit the effect of each embodiment to the maximum, the upper limit of the conditional expression (5) is preferably set to 1.05.

In order to further ensure the effect of each embodiment, the lower limit of the conditional expression (5) is preferably set to 0.85. In order to exhibit the effect of each embodiment to the maximum, the lower limit of the conditional expression (5) is preferably set to 0.89.

In the zoom lenses ZL according to the first and second embodiments, the third lens group G3 preferably has a cemented lens formed by cementing a positive lens and a negative lens.

According to this configuration, both the vibration-proof performance and optical performance can be successfully ensured. Moreover, according to the configuration in which the positive lens and the negative lens are cemented, various aberrations such as axial chromatic aberration can be successfully corrected.

In the zoom lenses ZL according to the first and second embodiments, the first lens group G1 preferably has, disposed in order from the object, a negative meniscus lens, a negative lens, and a positive lens.

According to this configuration, various aberrations such as distortion and curvature of field can be successfully corrected.

In the zoom lenses ZL according to the first and second embodiments, the first lens group G1 preferably has at least one aspherical lens. In particular, a lens on a side closest to the object in the first lens group G1 is preferably an aspherical lens.

According to this configuration, an image with higher resolution can be obtained.

The zoom lenses ZL according to the first and second embodiments each preferably have a configuration in which focusing is made by moving at least a part of the second lens group G2 along an optical axis direction.

According to this configuration, variations in curvature of field upon focusing can be suppressed. Moreover, a successful image can also be obtained even in short distant photographing.

The zoom lenses ZL according to the first and second embodiments each preferably have an aperture stop S between the second lens group G2 and the third lens group G3.

According to this configuration, spherical aberration can be successfully corrected.

In the zoom lenses ZL according to the first and second embodiments, the aperture stop S preferably moves integrally with the third lens group G3 upon zooming.

According to this configuration, spherical aberration caused upon zooming can be successfully corrected.

According to the first and second embodiments as described above, the zoom lens ZL which is provided with the vibration-proof function, is bright, and has high imaging performance can be realized.

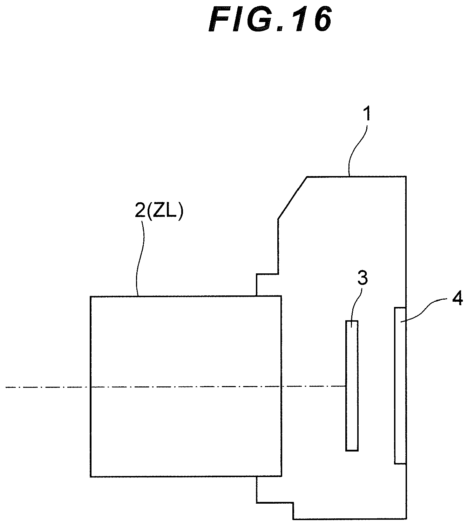

Next, a camera (imaging device) 1 provided with the above-mentioned zoom lens ZL will be described with reference to FIG. 16. As shown in FIG. 16, the camera 1 is an interchangeable lens camera (so-called mirrorless camera) provided with the above-mentioned zoom lens ZL as an imaging lens 2.

In the camera 1, light from an object (subject) (not shown) is collected by the imaging lens 2 to form a subject image on an imaging surface of an imaging unit 3 through an OLPF (optical low pass filter) (not shown). The subject image is then subjected to photoelectric conversion by a photoelectric conversion element provided in the imaging unit 3 to produce an image of the subject. This image is displayed on an EVF (electronic view finder) 4 provided in the camera 1. Thus, a photographer can observe the subject through the EVF 4.

Moreover, when a release bottom (not shown) is pressed by the photographer, the image of the subject produced in the imaging unit 3 is stored in a memory (not shown). In this manner, the photographer can photograph the subject by the camera 1.

As is known also from each Example described later, in the zoom lens ZL, mounted in the camera 1 as the imaging lens 2, the zoom lens which is provided with the vibration-proof function, is bright, and has high imaging performance is realized by the characteristic lens configuration. Therefore, according to the camera 1, the imaging device which is provided with the vibration-proof function, is bright, and has high imaging performance can be realized.

In addition, even when the above-mentioned zoom lens ZL is mounted on a single-lens reflex camera that has a quick return mirror and observes the subject by a finder optical system, an effect similar to the effect of the camera 1 can be produced. Moreover, even when the above-mentioned zoom lens ZL is mounted on a video camera, an effect similar to the effect of the camera 1 can be produced.

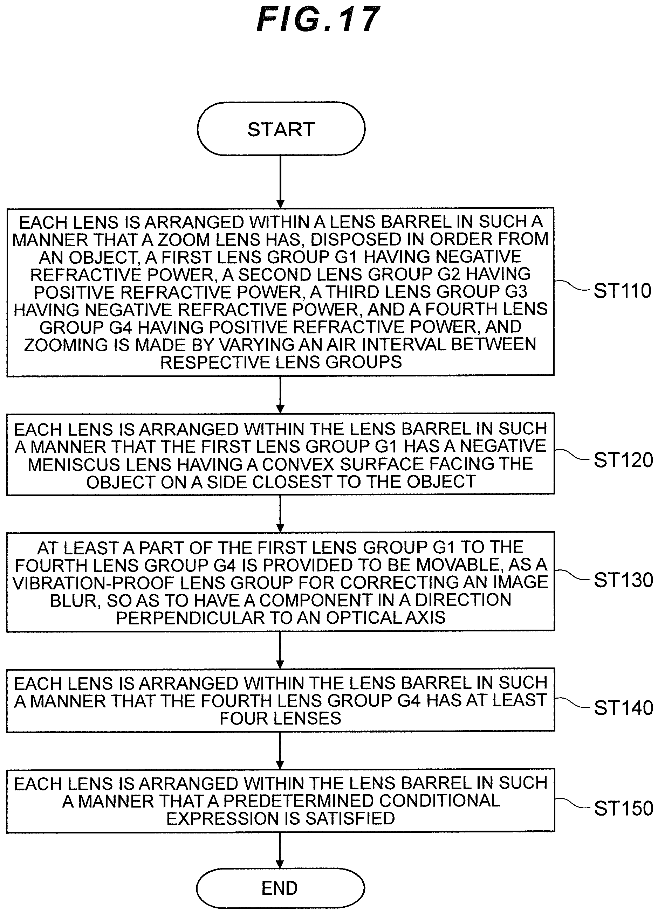

Subsequently, a method for manufacturing the zoom lens ZL according to the first embodiment will be generally described with reference to FIG. 17. Each lens is arranged within a lens barrel in such a manner that the zoom lens ZL has, disposed in order from an object, a first lens group G1 having negative refractive power, a second lens group G2 having positive refractive power, a third lens group G3 having negative refractive power, and a fourth lens group G4 having positive refractive power, and zooming is made by varying air distances between the lens groups, respectively (step ST110). At this time, the first lens group G1 is configured so as to have, on a side closest to the object, a negative meniscus lens having a convex surface facing the object (step ST120). At least a part of the first lens group G1 to the fourth lens group G4 is provided to be movable, as a vibration-proof lens group for correcting an image blur, so as to have a component in a direction perpendicular to the optical axis (step ST130). The fourth lens group G4 is configured so as to have at least four lenses (step ST140). Each lens is arranged in such a manner that at least the conditional expression (1) is satisfied among the conditional expressions (step ST150).

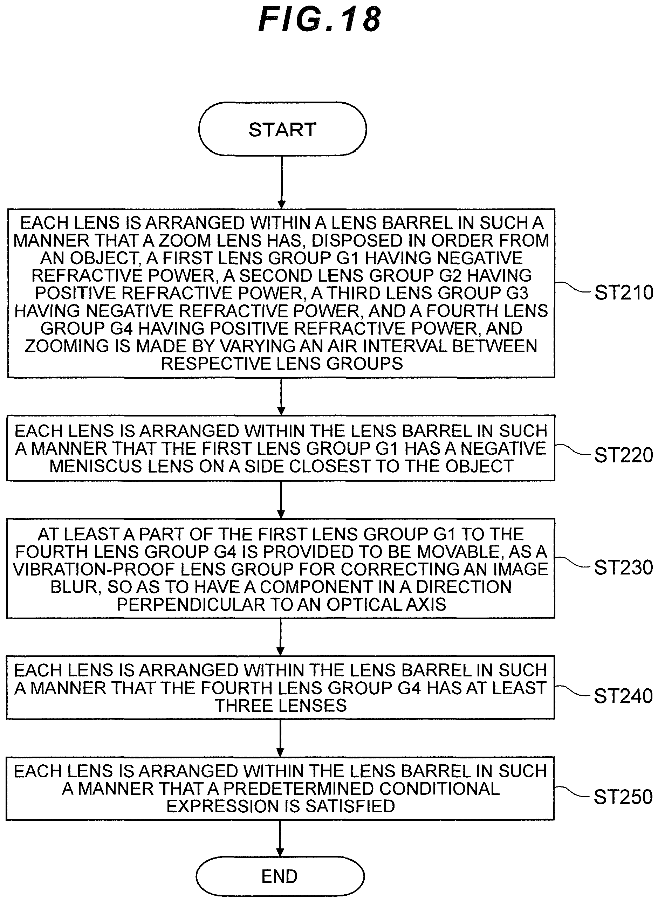

A method for manufacturing the zoom lens ZL according to the second embodiment will be generally described with reference to FIG. 18. Each lens is arranged within a lens barrel in such a manner that the zoom lens ZL has, disposed in order from an object, a first lens group G1 having negative refractive power, a second lens group G2 having positive refractive power, a third lens group G3 having negative refractive power, and a fourth lens group G4 having positive refractive power, and zooming is made by varying air distances between the lens groups, respectively (step ST210). At this time, the first lens group G1 is configured so as to have, on a side closest to the object, a negative meniscus lens (step ST220). At least a part of the first lens group G1 to the fourth lens group G4 is provided to be movable, as a vibration-proof lens group for correcting an image blur, so as to have a component in a direction perpendicular to the optical axis (step ST230). The fourth lens group G4 is configured so as to have at least three lenses (step ST240). Each lens is arranged in such a manner that at least the conditional expression (2) is satisfied among the conditional expressions (step ST250).

To take a lens arrangement according to the second embodiment as one example, as shown in FIG. 1, as a first lens group G1, in order from an object, a negative meniscus lens L11 having a convex surface facing the object, a biconcave lens L12, and a positive meniscus lens L13 having a convex surface facing the object are arranged. As a second lens group G2, in order from the object, a positive meniscus lens L21 having a convex surface facing the object, a biconvex lens L22, and a cemented lens formed by cementing a biconvex lens L23 and a biconcave lens L24 are arranged. As a third lens group G3, in order from the object, a cemented lens formed by cementing a positive meniscus lens L31 having a convex surface facing an image and a biconcave lens L32 is arranged. As a fourth lens group G4, in order from the object, a biconvex lens L41, a cemented lens formed by cementing a negative meniscus lens L42 having a concave surface facing the image and a biconvex lens L43, and a cemented lens formed by cementing a biconvex lens L44 and a biconcave lens L45 are arranged. The third lens group G3 is provided to be movable, as a vibration-proof lens group for correcting an image blur, so as to have a component in a direction perpendicular to an optical axis. Moreover, each lens is arranged in such a manner that a predetermined conditional expression is satisfied.

According to the manufacturing method as described above, the zoom lens ZL which is provided with the vibration-proof function, is bright, and has high imaging performance can be obtained.

EXAMPLES

Next, each Example according to each of first and second embodiments will be described based on drawings. Tables 1 to 3 are provided below, and these Tables indicate specifications in Example 1 to Example 3, respectively.

FIG. 1, FIG. 6, and FIG. 11 each are a cross-sectional view showing a lens configuration of a zoom optical system (zoom lens) ZL (ZL1 to ZL3) according to each Example. In these cross-sectional views showing the zoom optical systems ZL1 to ZL3, a moving track of each of lens groups G1 to G4 along an optical axis upon zooming from a wide-angle end state (W) to a telephoto end state (T) is shown by an arrow.

Each reference sign for FIG. 1 according to Example 1 is independently used for each Example in order to avoid complication of the description by an increase in digit number of the reference sign. Therefore, even if reference signs common to the reference signs in drawings according to other Examples are placed, the reference signs do not necessarily provide configurations common to the configurations in other Examples.

In each Example, a d-line (wavelength: 587.5620 nm) and a g-line (wavelength: 435.8350 nm) are selected as an object for calculation of aberration characteristics.

In "Lens Data" in the Table, a surface number indicates an order of an optical surface from an object along a direction in which a ray of light progresses, r denotes a radius of curvature of each optical surface, D denotes a distance to the next lens surface as a distance from each optical surface to the next optical surface (or image surface) on an optical axis, vd denotes the Abbe number of a material of an optical member as a reference based on the d-line, and nd denotes a refractive index of the material of the optical member for the d-line. Moreover, (Variable) indicates a variable distance to the next lens surface, "∞" in a radius of curvature indicates a flat surface or an aperture, and (Stop S) indicates an aperture stop S, (Stop FS) indicates a flare cut stop, and Bf denotes a back focus (a distance from a lens final surface to an image surface I the optical axis). A refractive index (d-line) of air "1.00000" is omitted. When the optical surface is aspherical, "*" is placed on a left side of the surface number, and a paraxial radius of curvature is shown in a column of the radius of curvature R.

In "Aspherical Surface Data" in the Table, a shape of an aspherical surface shown in "Lens Data" is expressed by the following expression (a). Here, y denotes a height in a direction perpendicular to an optical axis, X(y) denotes an amount of displacement (amount of sag) in an optical axis direction at a height y, r denotes a radius of curvature (paraxial radius of curvature) of a reference spherical surface, κ denotes a conical coefficient, and An represents an n-th aspherical coefficient. In addition, "E-n" represents "× 10$^{-n}$, " and for example, "1.234E-05" represents "1.234 × 10$^{-5}$. "

$$X(y) = (y^2/r) / [1 + \{1 - \kappa(y^2/r^2)\}^{1/2}] + A4 \times y^4 + A6 \times y^6 + A8 \times y^8 + A10 \times y^{10} + A12 \times y^{12} \ldots (a)$$

In "Various Data" in the Table, f denotes a focal length of the zoom lens, FNO denotes an F-number, and 2ω denotes an angle of view (unit: °), Y denotes an image height, TL denotes a total length of the zoom lens (a distance from a lens forefront surface to an image surface I on an optical axis), and Bf denotes a back focus (a distance from a lens final surface to the image surface I on the optical axis).

In "Variable Distance Data" in the Table, f denotes a focal lengths of the zoom lens, R denotes an imaging distance, D0 denotes a distance from an object surface to a first surface, Di (where, i is an integer) denotes a variable distance between an i-th surface and a (i+1)-th surface, and Bf denotes a back focus.

In "Lens Group Data" in the Table, a start surface number (surface number on a side closest to an object) of each group is shown in a group first surface, and a focal length of each group is shown in a group focal length.

In "Conditional Expression Corresponding Value" in the Table, values corresponding to the conditional expressions (1) to (5) are shown.

In the following, in all the values of the specifications, unless otherwise stated, "mm" is generally used for the focal length f, the radius of curvature r, the distance to the next lens surface D and other lengths, and the like entered therein. However, equivalent optical performance can be obtained even though the optical system is proportionally scaled up or scaled down, and therefore the values are not limited thereto. Moreover, the unit is not limited to "mm," and other appropriate units can be used.

The description with regard to Table so far is common in all Examples, and the description in the following is omitted.

(Example 1)

Example 1 will be described using FIG. 1, FIGS. 2A and 2B, FIG. 3, FIG. 4, FIGS. 5A and 5B and Table. 1. As shown in FIG. 1, a zoom lens ZL (ZL1) according to Example 1 is formed of, disposed in order from an object along an optical axis, a first lens group G1 having negative refractive power, a second lens group G2 having positive refractive power, a third lens group G3 having negative refractive power, and a fourth lens group G4 having positive refractive power.

The first lens group G1 is formed of, disposed in order from the object, a negative meniscus lens L11 having a convex surface facing the object, a biconcave lens L12, and a positive meniscus lens L13 having a convex surface facing the object. A surface of the negative meniscus lens L11 to an image is aspherical.

The second lens group G2 is formed of, disposed in order from the object, a positive meniscus lens L21 having a convex surface facing the object, a biconvex lens L22, and a cemented lens formed by cementing a biconvex lens L23 and a biconcave lens L24. A surface of the positive meniscus lens L21 to the object is aspherical. A surface of the biconcave lens L24 to the image is aspherical.

The third lens group G3 is formed of, disposed in order from the object, a cemented lens formed by cementing a positive meniscus lens L31 having a convex surface facing the image and a biconcave lens L32. A surface of the biconcave lens L32 to the image is aspherical.

The fourth lens group G4 is formed of, disposed in order from the object, a biconvex lens L41, a cemented lens formed by cementing a negative meniscus lens L42 having a concave surface facing the image and a biconvex lens L43, and a cemented lens formed by cementing a biconvex lens L44 and a biconcave lens L45. A surface of the biconvex lens L44 to the object is aspherical.

A first flare cut stop FS1 is provided on a side closest to the image in the second lens group G2. An aperture stop S is provided (to the image in the stop FS1, and) between the second lens group G2 and the third lens group G3. A second flare cut stop FS2 is provided on a side closest to the image in the third lens group G3.

An image surface I is formed on an imaging element (not shown), and the imaging element is formed of a CCD, a CMOS, and the like.

In the zoom lens ZL1 according to the present Example, upon zooming, the first lens group G1 to the fourth lens group G4 move along the optical axis in such a manner that an air distance between the first lens group G1 and the second lens group G2, an air distance between the second lens group G2 and the third lens group G3, and an air distance between the third lens group G3 and the fourth lens group G4 vary.

More specifically, upon zooming from a wide-angle end state to a telephoto end state, the first lens group G1 moves to the image along the optical axis so as to draw a convex track to the image. The second lens group G2 to the fourth lens group G4 move to the object along the optical axis. The aperture stop S moves to the object along the optical axis integrally with the third lens group G3.

Focusing is made by moving the positive meniscus lens L21 (as a focusing group) configuring the second lens group G2 along the optical axis. More specifically, upon focusing from an infinite distant object to a short distant object, focusing is made by moving the positive meniscus lens L21 to the image along the optical axis.

Upon occurrence of an image blur, correction of the image blur on the image surface I (vibration proofing) is made by moving, as a vibration-proof lens group, the third lens group G3 as a whole so as to have a component in a direction perpendicular to the optical axis.

Table 1 below shows values of each of specifications in Example 1. Surface numbers 1 to 27 in Table 1 correspond to optical surfaces m1 to m27 shown in FIG. 1.

(Table 1)

[Lens Data]

| Surface Number | r | D | νd | nd |
|---|---|---|---|---|
| 1 | 39.362 | 1.368 | 49.25 | 1.74300 |
| *2 | 14.687 | 14.200 | | |
| 3 | -42.564 | 1.500 | 82.57 | 1.49782 |
| 4 | 22.187 | 2.310 | | |
| 5 | 28.667 | 3.473 | 25.45 | 1.80518 |
| 6 | 94.682 | D6(Variable) | | |
| *7 | 52.872 | 1.821 | 54.89 | 1.67798 |
| 8 | 1597.743 | D8 (Variable) | | |
| 9 | 29.362 | 3.459 | 63.34 | 1.61800 |
| 10 | -73.224 | 0.10 | | |
| 11 | 57.876 | 3.061 | 82.57 | 1.49782 |
| 12 | -30.405 | 1.000 | 23.78 | 1.84666 |
| *13 | 277.194 | 0.201 | | |
| 14 | ∞ | D14(Variable) | (Stop FS1) | |
| 15 | ∞ | 3.615 | (Stop S) | |
| 16 | -75.472 | 2.500 | 23.80 | 1.84666 |
| 17 | -18.028 | 0.700 | 44.98 | 1.79063 |
| *18 | 31.460 | 0.994 | | |
| 19 | ∞ | D19(Variable) | (Stop FS2) | |
| 20 | 26.505 | 2.915 | 82.57 | 1.49782 |
| 21 | -116.040 | 0.100 | | |
| 22 | 25.540 | 1.367 | 48.10 | 1.70000 |
| 23 | 26.985 | 3.993 | 82.57 | 1.49782 |
| 24 | -29.826 | 0.100 | | |
| *25 | 81.449 | 3.205 | 82.57 | 1.49782 |
| 26 | -15.111 | 0.700 | 50.27 | 1.71999 |
| 27 | 41.832 | Bf | | |

[Aspherical Surface Data]

The 2nd Surface

$$\kappa = -1.5664$$

$$A4 = 8.04673E-05$$

$$A6 = -1.76449E-07$$

$$A8 = 6.06198E-10$$

$$A10= -8.92548E-13$$

$$A12= 0.00000E+00$$

The 7th Surface

$$\kappa = -16.5346$$

$$A4 = 1.06370E-05$$

$$A6 = -3.12969E-08$$

$$A8 = 5.79447E-11$$

$$A10= 0.00000E+00$$

$$A12= 0.00000E+00$$

The 13th Surface

$$\kappa = 1.0000$$

$$A4 = 3.94969E-07$$

$$A6 = -8.79660E-09$$

$$A8 = 4.60168E-11$$

$$A10= 0.00000E+00$$

$$A12= 0.00000E+00$$

The 18th Surface

$$\kappa = 1.0000$$

$$A4 = -1.49447E-05$$

$$A6 = 3.60055E-08$$

$$A8 = -9.93730E-11$$

$$A10 = 0.00000E+00$$

$$A12 = 0.00000E+00$$

The 25th Surface

$$\kappa = 1.0000$$

$$A4 = -5.41078E-05$$

$$A6 = -5.42756E-08$$

$$A8 = 0.00000E+00$$

$$A10 = 0.00000E+00$$

$$A12 = 0.00000E+00$$

[Various Data]

| | | | | |
|---|---|---|---|---|
| f | = | 9.20 | ~ | 29.20 |
| FNO | = | 3.66 | ~ | 6.00 |
| 2ω | = | 84.3° | ~ | 30.6° |
| Y | = | 7.97 | | |
| TL | = | 126.3 | ~ | 108.1 |
| Bf | = | 16.196 | ~ | 39.234 |

[Variable Distance Data]

| f | 9.20 | 13.40 | 18.40 | 29.20 |
|---|---|---|---|---|
| D0 | 0.000 | 0.000 | 0.000 | 0.000 |
| D6 | 42.905 | 23.475 | 12.302 | 2.300 |
| D8 | 6.874 | 6.874 | 6.874 | 6.874 |
| D14 | 1.263 | 3.052 | 4.532 | 6.056 |
| D19 | 6.423 | 4.848 | 3.291 | 1.000 |
| Bf | 16.196 | 20.657 | 26.420 | 39.234 |

| R | 200.0 | 250.0 | 300.0 | 350.0 |
|---|---|---|---|---|
| D0 | 73.659 | 138.413 | 193.901 | 241.855 |
| D6 | 47.179 | 26.254 | 14.607 | 4.492 |
| D8 | 2.600 | 4.095 | 4.569 | 4.682 |
| D14 | 1.263 | 3.052 | 4.532 | 6.056 |
| D19 | 6.423 | 4.848 | 3.291 | 1.000 |
| Bf | 16.196 | 20.657 | 26.420 | 39.234 |

[Lens Group Data]

| Group Number | Group First Surface | Group Focal Length |
|---|---|---|
| G1 | 1 | -20.5 |
| G2 | 7 | 28.7 |
| G3 | 16 | -29.7 |
| G4 | 20 | 25.2 |

[Conditional Expression Corresponding Value]

$$\text{Conditional Expression}(1): fw/f2 = 0.32$$

$$\text{Conditional Expression}(2): (ft/fw)/Fw = 1.69$$

$$\text{Conditional Expression}(3): ft/f2 = 1.02$$

$$\text{Conditional Expression}(4): (-f1)/f2 = 0.716$$

$$\text{Conditional Expression}(5): f2/(-f3) = 0.965$$

Table 1 shows that the zoom lens ZL1 according to Example 1 satisfies the conditional expressions (1) to (5).

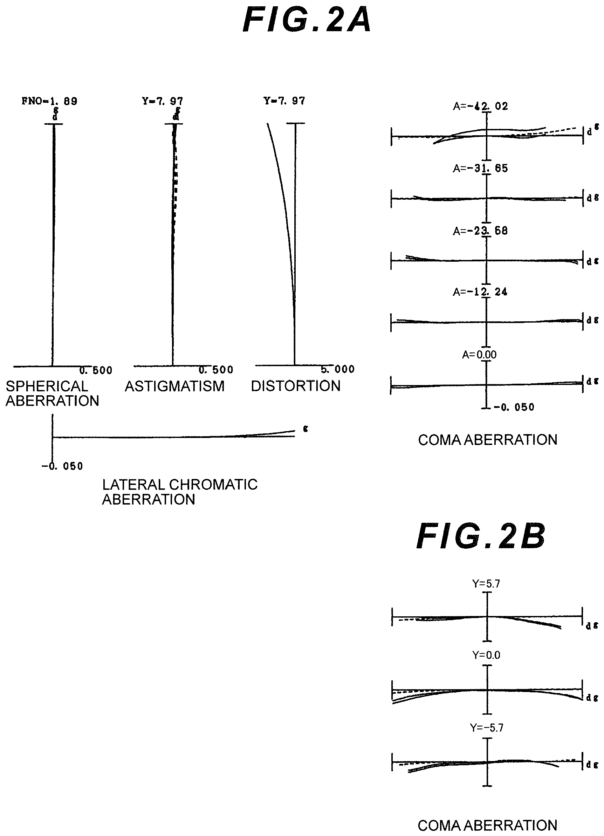

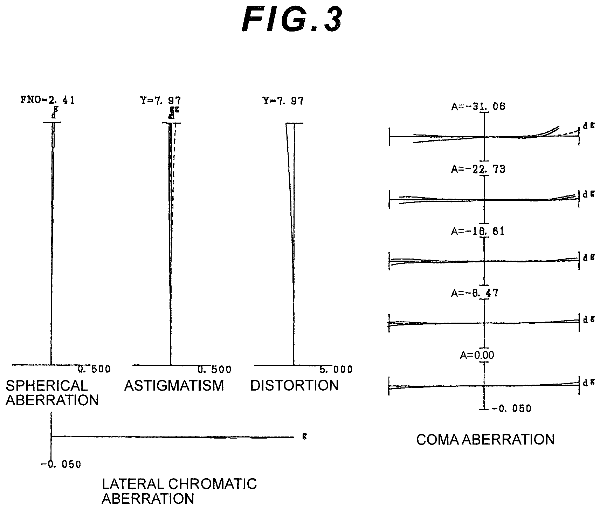

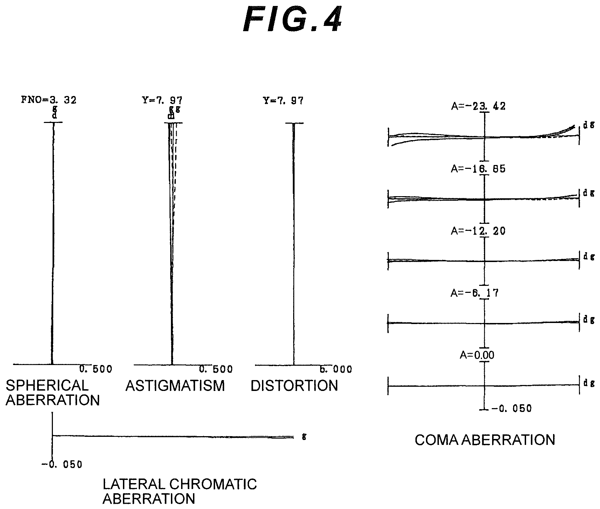

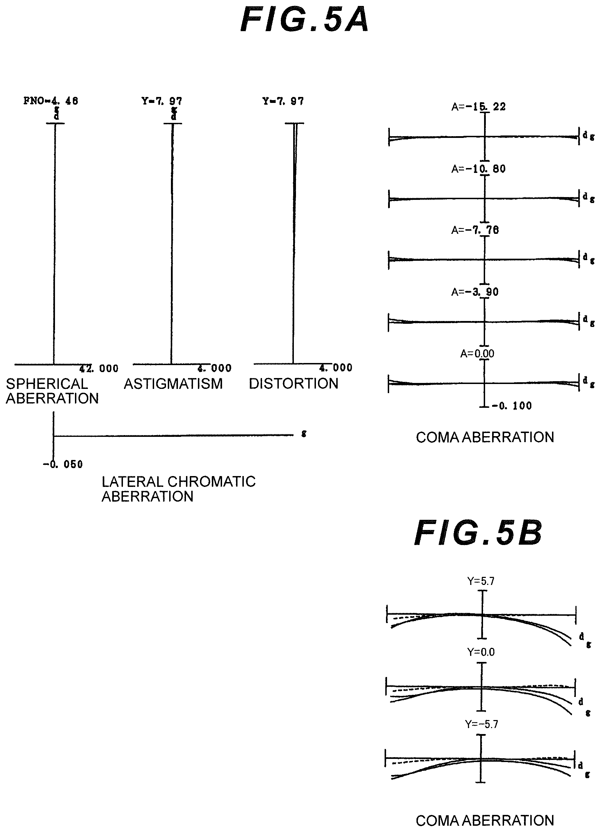

FIGS. 2A and 2B are graphs showing aberrations of the zoom lens ZL1 according to Example 1 in a wide-angle end state (f = 9.20), in which FIG. 2A is graphs showing various aberrations upon focusing on infinity and FIG. 2B is graphs showing coma aberration when an image blur is corrected (a vibration-proof lens group shift amount = 0.154) upon focusing on infinity. FIG. 3 is graphs showing various aberrations of the zoom lens ZL1 according to Example 1 in a first intermediate focal length state (f = 13.40) upon focusing on infinity. FIG. 4 is graphs showing various aberrations of the zoom lens ZL1 according to Example 1 in a second intermediate focal length state (f = 18.40) upon focusing on infinity. FIGS. 5A and 5B are graphs showing aberrations of the zoom lens ZL1 according to Example 1 in a telephoto end state (f = 29.20), in which FIG. 5A is graphs showing various aberrations upon focusing on infinity and FIG. 5B is graphs showing coma aberration when an image blur is corrected (a vibration-proof lens group shift amount = 0.457) upon focusing on infinity. In the present Example, as shown in FIG. 2B and FIG. 5B, optical performance upon vibration proofing is shown in graphs showing coma aberration, centering on an image height y = 0.0, corresponding to image heights of vertically plus 5.7 and minus 5.7.

In each of the graphs showing aberration, FNO denotes an F-number, Y denotes an image height, A denotes a half angle of view (unit: °), d denotes aberration in a d-line, and g denotes aberration in a g-line. A column without description of d or g indicates aberration in the d-line. In the graphs showing spherical aberration, a value of the F-number corresponding to a maximum aperture is shown, and in the graphs showing astigmatism and distortion, a maximum value of the image height is shown. In the graphs showing astigmatism, a solid line indicates a sagittal image surface and a broken line indicates a meridional image surface. In the graphs showing coma aberration, a solid line indicates meridional coma, and a broken line indicates sagittal coma. The description of the graphs showing aberration above is deemed to be the same also in other Examples, and the description is omitted.

From each of the graphs showing aberration, the zoom lens ZL1 according to Example 1 is found to have high imaging performance in which various aberrations are successfully corrected from a wide-angle end state to a telephoto end state. Moreover, the zoom lens ZL1 is found to have high imaging performance also upon correcting the image blur.

(Example 2)

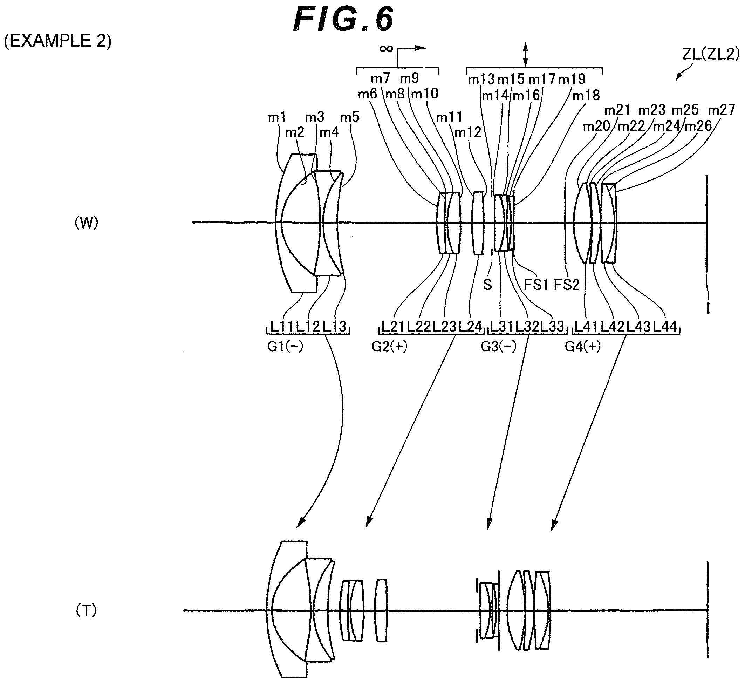

Example 2 will be described using FIG. 6, FIGS. 7A and 7B, FIG. 8, FIG. 9 and FIGS. 10A and 10B. As shown in FIG. 6, a zoom lens ZL (ZL2) according to Example 2 is formed of, disposed in order from an object along an optical axis, a first lens group G1 having negative refractive power, a second lens group G2 having positive refractive power, a third lens group G3 having negative refractive power, and a fourth lens group G4 having positive refractive power.

The first lens group G1 is formed of, disposed in order from the object, a negative meniscus lens L11 having a convex surface facing the object, and a cemented lens formed by cementing a biconcave lens L12 and a positive meniscus lens L13 having a convex surface facing the object. A surface of the negative meniscus lens L11 to an image is aspherical.

The second lens group G2 is formed of, disposed in order from the object, a positive meniscus lens L21 having a convex surface facing the object, a cemented lens formed by cementing a negative meniscus lens L22 having a concave surface facing the image and a biconvex lens L23, and a biconvex lens L24. A surface of the positive meniscus lens L21 to the object is aspherical. A surface of the biconvex lens L24 to the object is aspherical.

The third lens group G3 is formed of, disposed in order from the object, a cemented lens formed by cementing a biconvex lens L31 and a biconcave lens L32, and a biconcave lens L33.

The fourth lens group G4 is formed of, disposed in order from the object, a biconvex lens L41, a positive meniscus lens L42 having a convex surface facing the image, and a cemented lens formed by cementing a biconvex lens L43 and a negative meniscus lens L44 having a concave surface facing the object. A surface of the negative meniscus lens L44 to the object is aspherical.

An aperture stop S is provided between the second lens group G2 and the third lens group G3. A first flare cut stop FS1 is provided on a side closest to the image in the third lens group G3. A second flare cut stop FS2 is provided on a side closest to the object in the fourth lens group G4.

An image surface I is formed on an imaging element (not shown), and the imaging element is configured of, a CCD, a CMOS, and the like.

In the zoom lens ZL2 according to Example 2, the first lens group G1 to the fourth lens group G4 move along the optical axis in such a manner that an air distance between the first lens group G1 and the second lens group G2, an air distance between the second lens group G2 and the third lens group G3, and an air distance between the third lens group G3 and the fourth lens group G4 vary upon zooming, respectively.

More specifically, upon zooming from a wide-angle end state to a telephoto end state, the first lens group G1 moves to the object along the optical axis so as to draw a convex track to the image. The second lens group G2 to the fourth lens group G4 move to the object along the optical axis. The aperture stop S moves to the object along the optical axis integrally with the third lens group G3.

Focusing is made by moving the lens group configuring the second lens group G2 formed of, disposed in order from the object, the positive meniscus lens L21 having the convex surface facing the object and the cemented lens formed by cementing the negative meniscus lens L22 having the concave surface facing the image and the biconcave lens L23, as the focusing group, along the optical axis. More specifically, upon focusing from an infinite distant object to a short distant object, focusing is made by moving the focusing group to the image along the optical axis.

Upon occurrence of an image blur, correction of the image blur on the image surface I (vibration proofing) is made by moving, as a vibration-proof lens group, the third lens group G3 as a whole so as to have a component in a direction perpendicular to the optical axis.

Table 2 below shows values of each of specifications in Example 2. Surface numbers 1 to 27 in Table 2 correspond to optical surfaces m1 to m27 shown in FIG. 6.

(Table 2)

[Lens Data]

| Surface Number | r | D | νd | nd |
|---|---|---|---|---|
| 1 | 39.318 | 1.368 | 49.51 | 1.74443 |
| *2 | 12.056 | 9.302 | | |
| 3 | -53.536 | 0.711 | 82.52 | 1.49782 |
| 4 | 19.517 | 3.371 | 25.42 | 1.80518 |
| 5 | 44.243 | D5(Variable) | | |
| *6 | 31.466 | 1.887 | 55.42 | 1.66771 |
| 7 | 96.262 | 0.100 | | |
| 8 | 96.831 | 0.547 | 23.78 | 1.84666 |
| 9 | 20.348 | 3.173 | 63.33 | 1.61800 |
| 10 | -62.101 | D10(Variable) | | |
| *11 | 46.872 | 2.899 | 49.40 | 1.74172 |
| 12 | -104.177 | D12 (Variable) | | |
| 13 | ∞ | 0.766 | (Stop S) | |
| 14 | 259.611 | 2.372 | 23.78 | 1.84666 |
| 15 | -18.961 | 0.547 | 46.57 | 1.80400 |
| 16 | 60.707 | 0.981 | | |
| 17 | -35.730 | 0.602 | 46.57 | 1.80400 |
| 18 | 78.964 | 0.000 | | |
| 19 | ∞ | D19(Variable) | (Stop FS1) | |
| 20 | ∞ | 2.000 | (Stop FS2) | |
| 21 | 21.583 | 4.288 | 82.52 | 1.49782 |
| 22 | -35.346 | 0.130 | | |
| 23 | -99.022 | 2.001 | 63.33 | 1.61800 |
| 24 | -37.594 | 0.100 | | |
| *25 | 63.928 | 3.419 | 82.52 | 1.49782 |
| 26 | -21.517 | 0.547 | 23.78 | 1.84666 |
| 27 | -87.812 | Bf | | |

[Aspherical Surface Data]

The 2nd Surface

$$\kappa = 0.0685$$

$$A4 = 3.08257E-05$$

$$A6 = -3.02551E-09$$

$$A8 = 8.46814E-10$$

A10= -3.69430E-12

A12= 0.12474E-13

The 6th Surface

$$\kappa = -0.9090$$

A4 = -1.12657E-05

A6 = -6.38068E-09

A8 = 1.26949E-11

A10= 0.00000E+00

A12= 0.00000E+00

The 11th Surface

$$\kappa = 1.9071$$

A4 = 1.00746E-05

A6 = 2.22441E-10

A8 = 2.03107E-10

A10= -9.32160E-13

A12= 0.00000E+00

The 25th Surface

$$\kappa = -27.8587$$

A4 = -2.65684E-05

A6 = -1.35986E-07

$$A8 = -4.35740E-10$$

$$A10 = 8.07566E-13$$

$$A12 = 0.00000E+00$$

[Various Data]

$$f = 9.20 \sim 29.20$$

$$FNO = 2.00 \sim 4.50$$

$$2\omega = 84.0° \sim 30.4°$$

$$Y = 7.97$$

$$TL = 104.3 \sim 106.8$$

$$Bf = 21.850 \sim 38.073$$

[Variable Distance Data]

| f | 9.20 | 13.12 | 20.04 | 29.20 |
|---|---|---|---|---|
| D0 | 0.000 | 0.000 | 0.000 | 0.000 |
| D5 | 24.115 | 14.050 | 6.493 | 3.000 |
| D10 | 2.735 | 2.735 | 2.735 | 2.735 |
| D12 | 2.030 | 7.159 | 14.705 | 21.742 |
| D19 | 12.502 | 9.234 | 4.460 | 0.100 |
| Bf | 21.850 | 24.439 | 30.115 | 38.073 |

| R | 200.0 | 250.0 | 300.0 | 350.0 |
|---|---|---|---|---|
| D0 | 95.659 | 151.273 | 200.382 | 243.241 |
| D5 | 26.584 | 15.747 | 7.920 | 4.267 |
| D10 | 0.266 | 1.037 | 1.308 | 1.468 |
| D12 | 2.030 | 7.159 | 14.705 | 21.742 |
| D19 | 12.502 | 9.234 | 4.460 | 0.100 |
| Bf | 21.850 | 24.439 | 30.115 | 38.073 |

[Lens Group Data]

| Group Number | Group First Surface | Group Focal Length |
|---|---|---|
| G1 | 1 | -16.9 |
| G2 | 6 | 24.2 |
| G3 | 14 | -29.7 |
| G4 | 21 | 21.4 |

[Conditional Expression Corresponding Value]

$$\text{Conditional Expression}(1): fw/f2 = 0.38$$

$$\text{Conditional Expression}(2): (ft/fw)/Fw = 1.59$$

$$\text{Conditional Expression}(3): ft/f2 = 1.21$$

$$\text{Conditional Expression}(4): (-f1)/f2 = 0.699$$

$$\text{Conditional Expression}(5): f2/(-f3) = 0.979$$

Table 2 shows that the zoom lens ZL2 according to Example 2 satisfies the conditional expressions (1) to (5).

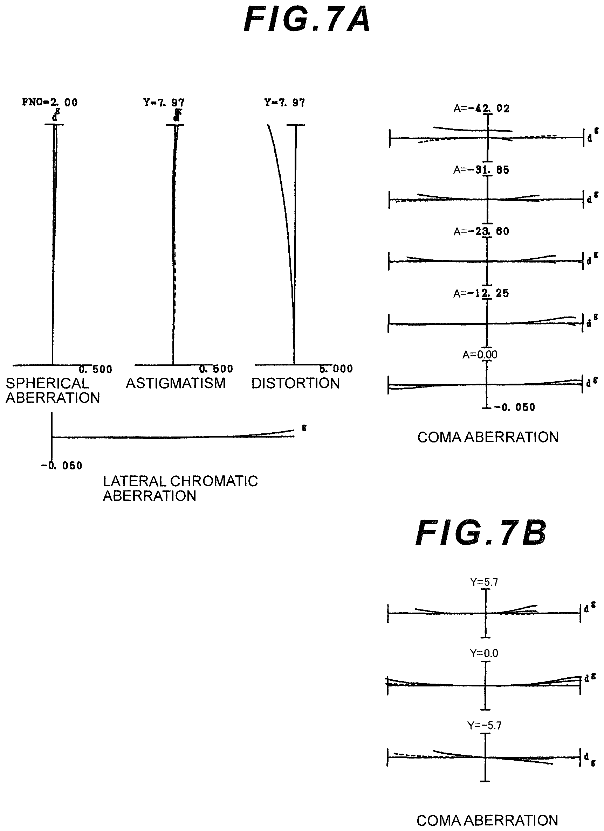

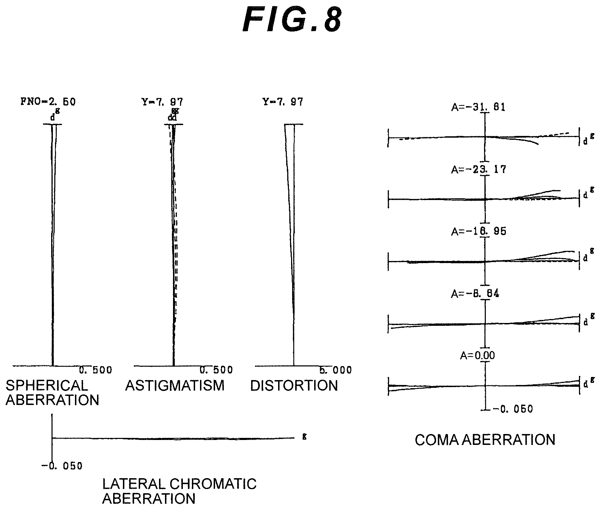

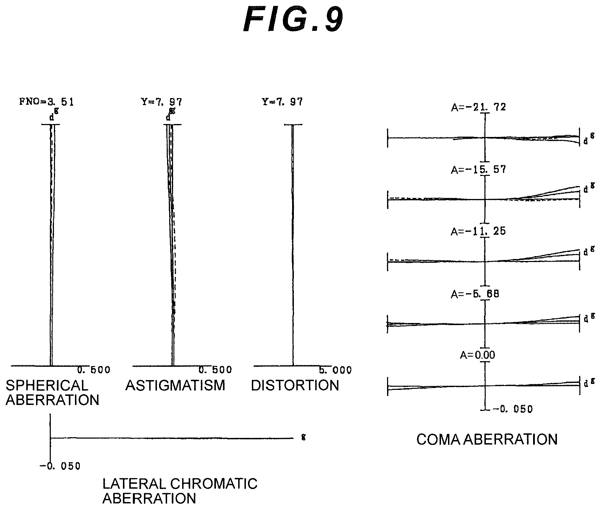

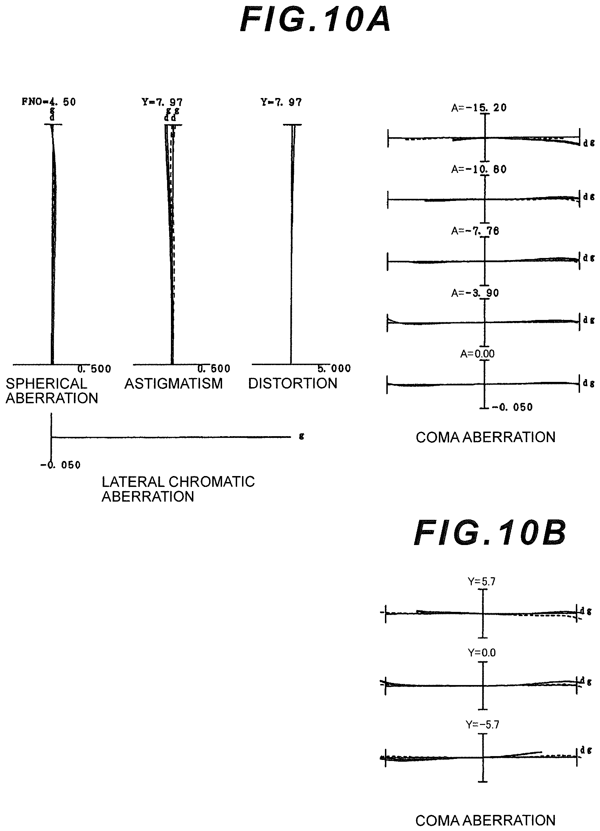

FIGS. 7A and 7B are graphs showing aberrations of the zoom optical system ZL2 according to Example 2 in a wide-angle end state (f = 9.20), in which FIG. 7A is graphs showing various aberrations upon focusing on infinity and FIG. 7B is graphs showing coma aberration when an image blur is corrected (a vibration-proof lens group shift amount = 0.116) upon focusing on infinity. FIG. 8 is graphs showing various aberrations of the zoom lens ZL2 according to Example 2 in a first intermediate focal length state (f = 13.12) upon focusing on infinity. FIG. 9 is graphs showing various aberrations of the zoom lens ZL2 according to Example 2 in a second intermediate focal length state (f = 20.04) upon focusing on infinity. FIGS. 10A and 10B are graphs showing aberrations of the zoom lens ZL2 according to Example 2 in a telephoto end state (f = 29.20), in which FIG. 10A is graphs showing various aberrations upon focusing on infinity and FIG. 10B is graphs showing coma aberration when an image blur is corrected (a vibration-proof lens group shift amount = 0.162) upon focusing on infinity. In the present Example, as shown in FIG. 7B and FIG. 10B, optical performance upon vibration proofing is shown in graphs showing coma aberration, centering on an image height y = 0.0, corresponding to image heights of vertically plus 5.7 and minus 5.7.
From each of the graphs showing aberration, the zoom lens ZL2 according to Example 2 is found to have high imaging performance in which various aberrations are successfully corrected from a wide-angle end state to a telephoto end state. Moreover, the zoom lens ZL2 is found to have high imaging performance also upon correcting the image blur.

(Example 3)

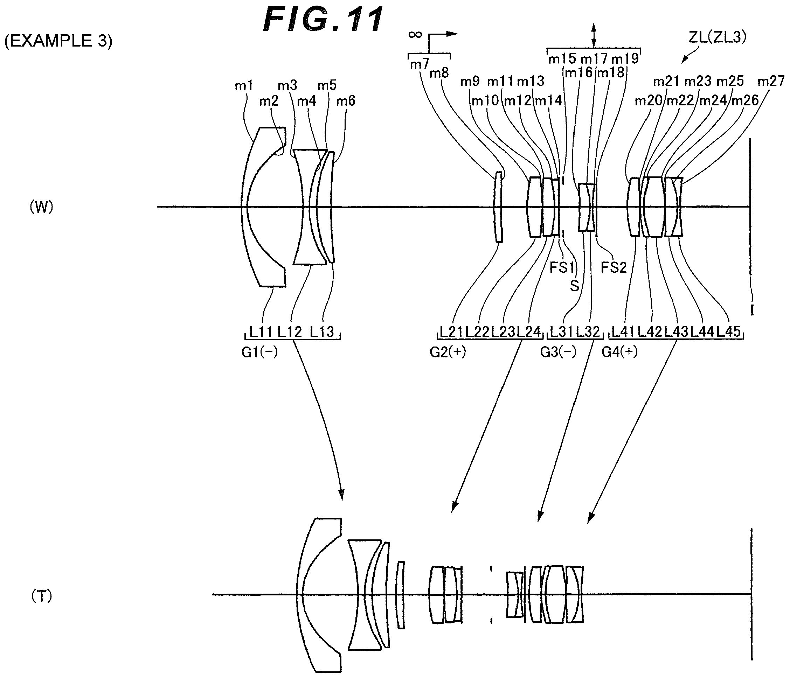

Example 3 will be described using FIG. 11, FIGS. 12A and 12B, FIG. 13, FIG. 14, FIGS. 15A and 15B, and Table 3. As shown in FIG. 11, a zoom lens ZL (ZL3) according to Example 3 is formed of, disposed in order from an object along an optical axis, a first lens group G1 having negative refractive power, a second lens group G2 having positive refractive power, a third lens group G3 having negative refractive power, and a fourth lens group G4 having positive refractive power.
The first lens group G1 is formed of, disposed in order from the object, a negative meniscus lens L11 having a convex surface facing the object, a biconcave lens L12, and a positive meniscus lens L13 having a convex surface facing the object. A surface of the negative meniscus lens L11 to an image is aspherical.

The second lens group G2 is formed of, disposed in order from the object, a positive meniscus lens L21 having a convex surface facing the object, a biconvex lens L22, a biconvex lens L23, and a negative meniscus lens L24 having a concave surface facing the object. A surface of the positive meniscus lens L21 to the object is aspherical. A surface of the negative meniscus lens L24 to the image is aspherical.

The third lens group G3 is formed of, disposed in order from the object, a positive meniscus lens L31 having a convex surface facing the image and a biconcave lens L32. A surface of the biconcave lens L32 to the image is aspherical.

The fourth lens group G4 is formed of, disposed in order from the object, a biconvex lens L41, a cemented lens formed by cementing a negative meniscus lens L42 having a concave surface facing the image and a biconvex lens L43, and a cemented lens formed by cementing a biconvex lens L44 and a biconcave lens L45. A surface of the biconvex lens L44 to the object is aspherical.

A first flare cut stop FS1 is provided on a side closest to the image in the second lens group G2. An aperture stop S is provided (in the stop FS1 to the image, and) between the second lens group G2 and the third lens group G3. A second flare cut stop FS2 is provided on a side closest to the image in the third lens group G3.

An image surface I is formed on an imaging element (not shown), and the imaging element is configured of a CCD, a CMOS, and the like.

In the zoom lens ZL3 according to Example 3, the first lens group G1 to the fourth lens group G4 move along the optical axis in such a manner that an air distance between the first lens group G1 and the second lens group G2, an air distance between the second lens group G2 and the third lens group G3, and an air distance between the third lens group G3 and the fourth lens group G4 vary upon zooming, respectively.

More specifically, upon zooming from a wide-angle end state to a telephoto end state, the first lens group G1 moves to the image along the optical axis so as to draw a convex track to the image. The second lens group G2 to the fourth lens group G4 move to the object along the optical axis. The aperture stop S moves to the object along the optical axis integrally with the third lens group G3.

Focusing is made by moving the positive meniscus lens L21 configuring the second lens group G2 (as a focusing group) along the optical axis. More specifically, upon focusing from an infinite distant object to a short distant object, focusing is made by moving the positive meniscus lens L21 to the image along the optical axis.

Upon occurrence of an image blur, correction of the image blur on the image surface I (vibration proofing) is made by moving, as a vibration-proof lens group, the third lens group G3 as a whole so as to have a component in a direction perpendicular to the optical axis.

Table 3 below shows values of each of specifications in Example 3. Surface numbers 1 to 27 in Table 3 correspond to optical surfaces m1 to m27 in FIG. 11, respectively.

(Table 3)

[Lens Data]

| Surface Number | r | D | νd | nd |
|---|---|---|---|---|
| 1 | 41.691 | 1.368 | 49.25 | 1.74300 |
| *2 | 13.609 | 13.366 | | |
| 3 | -39.182 | 1.500 | 82.57 | 1.49782 |
| 4 | 22.396 | 1.750 | | |
| 5 | 28.193 | 3.473 | 25.45 | 1.80518 |
| 6 | 113.537 | D6(Variable) | | |
| *7 | 48.562 | 1.802 | 54.89 | 1.67798 |
| 8 | 457.035 | D8(Variable) | | |
| 9 | 30.546 | 3.557 | 63.34 | 1.61800 |
| 10 | -56.387 | 0.100 | | |
| 11 | 85.965 | 2.940 | 82.57 | 1.49782 |
| 12 | -27.621 | 1.000 | 23.78 | 1.84666 |
| *13 | -2008.330 | 0.100 | | |
| 14 | ∞ | D14(Variable) | (Stop FS1) | |
| 15 | ∞ | 3.891 | (Stop S) | |
| 16 | -68.720 | 2.500 | 23.80 | 1.84666 |
| 17 | -17.528 | 0.700 | 44.98 | 1.79063 |
| *18 | 34.881 | 0.890 | | |
| 19 | ∞ | D19(Variable) | (Stop FS2) | |
| 20 | 26.505 | 2.915 | 82.57 | 1.49782 |

(continued)

[Lens Data]

| Surface Number | r | D | νd | nd |
|---|---|---|---|---|
| 21 | -126.616 | 0.100 | | |
| 22 | 24.825 | 1.000 | 48.10 | 1.70000 |
| 23 | 20.206 | 4.894 | 82.57 | 1.49782 |
| 24 | -28.630 | 0.100 | | |
| *25 | 155.411 | 2.965 | 82.57 | 1.49782 |
| 26 | -15.358 | 0.700 | 50.27 | 1.71999 |
| 27 | 54.136 | Bf | | |

[Aspherical Surface Data]

The 2nd Surface

$$\kappa = -1.1700$$

$$A4 = 7.96413E-05$$

$$A6 = -1.40084E-07$$

$$A8 = 5.34943E-10$$

$$A10 = -8.12226E-13$$

$$A12 = 0.00000E+00$$

The 7th Surface

$$\kappa = -14.0244$$

$$A4 = 1.08842E-05$$

$$A6 = -3.54998E-08$$

$$A8 = 6.06210E-11$$

$$A10 = 0.00000E+00$$

$$A12 = 0.00000E+00$$

The 13<sup>th</sup> Surface

$$\kappa = 1.0000$$

$$A4 = 8.01417E-07$$

$$A6 = -1.19453E-08$$

$$A8 = 4.72680E-11$$

$$A10= 0.00000E+00$$

$$A12= 0.00000E+00$$

The 18<sup>th</sup> Surface

$$\kappa = 1.0000$$

$$A4 = -1.33809E-05$$

$$A6 = 4.45496E-08$$

$$A8 = -1.85611E-10$$

$$A10= 0.00000E+00$$

$$A12= 0.00000E+00$$

The 25<sup>th</sup> Surface

$$\kappa = 1.0000$$

$$A4 = -5.51507E-05$$

$$A6 = -5.23755E-08$$

$$A8 = 0.00000E+00$$

A10= 0.00000E+00

A12= 0.00000E+00

[Various Data]

f     =  9.20   ~   29.20

FNO   =  2.80   ~   5.40

2ω    =  85.8°  ~   31.25°

Y     =  7.97

TL    =  122.1  ~   109.1

Bf    =  16.825 ~   40.890

[Variable Distance Data]

| f | 9.20 | 12.63 | 17.73 | 29.20 |
|---|---|---|---|---|
| D0 | 0.000 | 0.000 | 0.000 | 0.000 |
| D6 | 39.000 | 23.581 | 12.249 | 2.300 |
| D8 | 6.174 | 6.174 | 6.174 | 6.174 |
| D14 | 1.000 | 2.851 | 4.860 | 7.157 |
| D19 | 7.502 | 5.914 | 3.937 | 1.000 |
| Bf | 16.825 | 20.596 | 26.625 | 40.890 |

| R | 200.0 | 250.0 | 300.0 | 350.0 |
|---|---|---|---|---|
| D0 | 77.890 | 139.276 | 194.547 | 240.871 |
| D6 | 42.574 | 25.982 | 14.262 | 4.251 |
| D8 | 2.599 | 3.773 | 4.160 | 4.222 |
| D14 | 1.000 | 2.851 | 4.860 | 7.157 |
| D19 | 7.502 | 5.914 | 3.937 | 1.000 |
| Bf | 16.825 | 20.596 | 26.625 | 40.890 |

[Lens Group Data]

| Group Number | Group First Surface | Group Focal Length |
|---|---|---|
| G1 | 1 | -18.9 |
| G2 | 7 | 28.0 |
| G3 | 15 | -31.1 |
| G4 | 20 | 26.2 |

[Conditional Expression Corresponding Value]

$$\text{Conditional Expression(1):} fw/f2 = 0.33$$

$$\text{Conditional Expression(2):} (ft/fw)/Fw = 1.13$$

$$\text{Conditional Expression(3):} ft/f2 = 1.04$$

$$\text{Conditional Expression(4):} (-f1)/f2 = 0.674$$

$$\text{Conditional Expression(5):} f2/(-f3) = 0.900$$

Table 3 shows that the zoom optical system ZL3 according to Example 3 satisfies all of the conditional expressions (1) to (5).

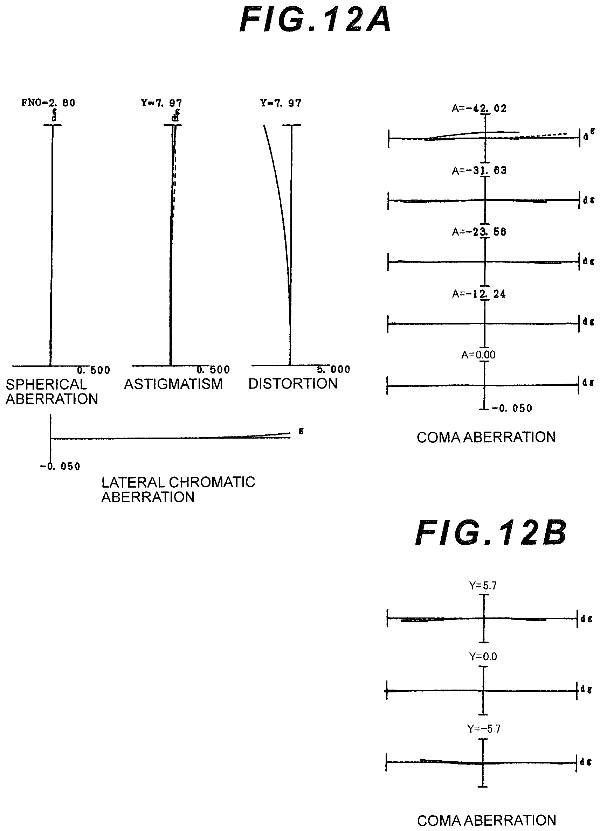

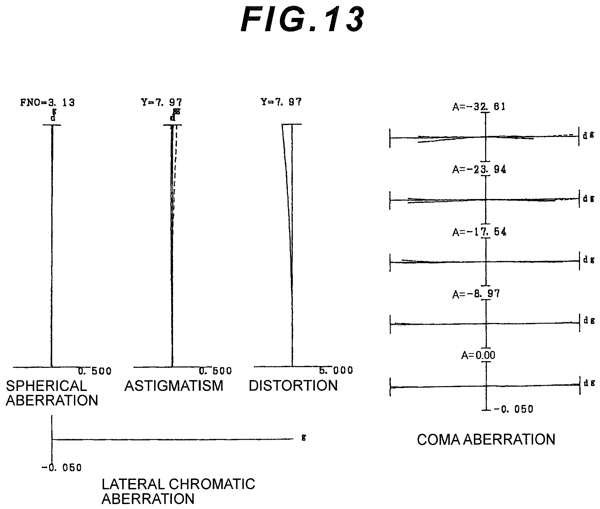

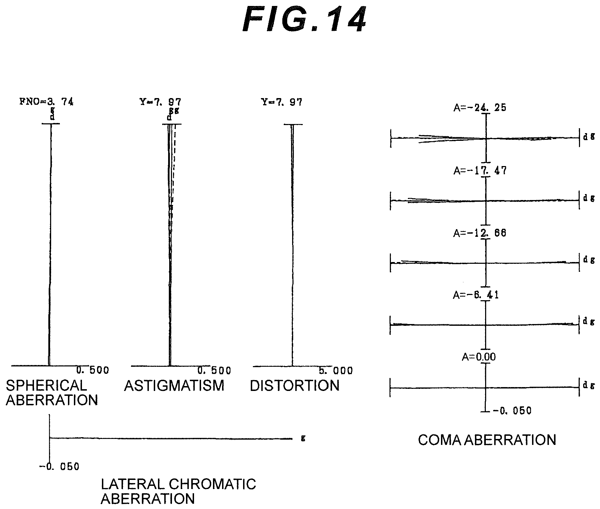

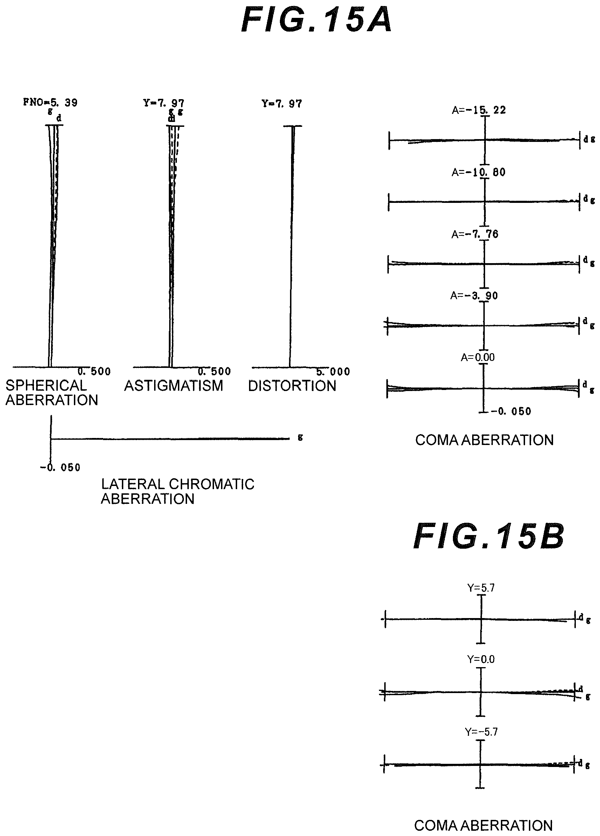

FIGS. 12A and 12B are graphs showing aberrations of the zoom lens ZL3 according to Example 3 in a wide-angle end state (f = 9.20), in which FIG. 12A is graphs showing various aberrations upon focusing on infinity and FIG. 12B is graphs showing coma aberration when an image blur is corrected (a vibration-proof lens group shift amount = 0.127)) upon focusing on infinity. FIG. 13 is graphs showing various aberrations of the zoom lens ZL3 according to Example 3 in a first intermediate focal length state (f = 12.63) upon focusing on infinity. FIG. 14 is graphs showing various aberrations of the zoom lens ZL3 according to Example 3 in a second intermediate focal length state (f = 17.73) upon focusing on infinity. FIGS. 15A and 15B are graphs showing aberrations of the zoom lens ZL3 according to Example 3 in a telephoto end state (f = 29.20), in which FIG. 15A is graphs showing various aberrations upon focusing on infinity and FIG. 15B is graphs showing coma aberration when an image blur is corrected (a vibration-proof lens group shift amount = 0.162) upon focusing on infinity. In the present Example, as shown in FIG. 12B and FIG. 15B, optical performance upon vibration proofing is shown in graphs showing coma aberration, centering on an image height y = 0.0, corresponding to image heights of vertically plus 5.7 and minus 5.7.

From each of the graphs showing aberration, the zoom lens ZL3 according to Example 3 is found to have high imaging performance in which various aberrations from the wide-angle end state to the telephoto end state are successfully corrected. Moreover, the zoom lens ZL3 is found to have high imaging performance also upon correcting the image blur.

According to each Example as described above, the zoom lens which is provided with a vibration-proof function, is bright, and has high imaging performance can be realized.

In addition, each Example described above shows one specific example of the zoom lens according to each of the first and second embodiments, and the zoom lens according to each of the first and second embodiments is not limited thereto. In the first and second embodiments, the following content can be appropriately adopted within the range in which the optical performance is not adversely affected.

In Examples using numerical values according to the first and second embodiments, a four-group configuration was shown. However, the present invention can also be applied to other configurations such as a five-group configuration. For example, a configuration in which a lens or lens group is added thereto on a side closest to the object, or a configuration is allowed in which a lens or lens group is added thereto on a side closest to the image. Moreover, the lens group represents a part which is separated by the air distances which change upon zooming or focusing and have at least one lens.

In the first and second embodiments, the zoom lens may be formed into a focusing lens group in which focusing on an infinite distant object to a short distant object is made by moving a single lens group or a plurality of lens groups, or a partial lens group in the optical axis direction. The focusing lens group can be applied to autofocusing, and is also suitable for a motor drive (using an ultrasonic motor, or the like) for autofocusing. In particular, at least a part of the second lens group G2 is preferably applied as the focusing lens group.

In the first and second embodiments, the zoom lens may be formed into a vibration-proof lens group in which the image blur caused by camera shake is corrected by moving the lens group or the partial lens group so as to have the component in the direction perpendicular to the optical axis, or rotationally moving (swinging) the lens group or the partial lens group in an in-plane direction including the optical axis. In particular, at least a part of the third lens group G3 is preferably applied as the vibration-proof lens group.

In the first and second embodiments, a lens surface may be formed of a spherical surface or a flat surface, or formed of an aspherical surface. When the lens has the spherical surface or the flat surface, lens processing and assembly and adjustment are facilitated, and deterioration of optical performance by an error of the processing and assembly and adjustment can be prevented. Thus, such a case is preferable. Moreover, when the lens has the aspherical surface, the aspherical surface may be any aspherical surface of an aspherical surface by grinding, a glass mold aspherical surface in which glass is formed into an aspherical surface shape by using a mold, and a composite type aspherical surface in which a resin is formed into the aspherical surface shape on a surface of glass. Moreover, the lens surface may be formed into a diffraction surface, or the lens may be formed into a gradient index lens (GRIN lens) or a plastic lens.

In the first and second embodiments, the aperture stop is preferably arranged in a neighborhood of the third lens group G3. Moreover, the flare cut stop is preferably arranged in neighborhoods of the second lens group G2 and the third lens group G3. However, a lens frame may be used as substitution for such a role without providing a member therefor.

In the first and second embodiments, an antireflection film having high transmittance in a wide wavelength range may be applied to each lens surface in order to reduce a flare and a ghost to achieve high optical performance with high contrast.

The zoom lenses ZL according to the first and second embodiments have a zoom ratio of about 3, and is suitable for a zoom lens having a zoom ratio of about 2 to 7.

EXPLANATION OF NUMERALS AND CHARACTERS

| ZL | (ZL1 to ZL3) Zoom lens |
|---|---|
| G1 | First lens group |
| G2 | Second lens group |
| G3 | Third lens group |
| G4 | Fourth lens group |
| S | Aperture stop |
| FS1, FS2 | Flare cut stop |
| I | Image surface |
| 1 | Camera (imaging device) |
| 2 | Imaging lens (zoom lens) |

**Claims**

1. A zoom lens, comprising: disposed in order from an object, a first lens group having negative refractive power; a second lens group having positive refractive power; a third lens group having negative refractive power; and a fourth lens group having positive refractive power, wherein
zooming is made by varying air distances between the lens groups, respectively,
the first lens group has, on a side closest to the object, a negative meniscus lens having a convex surface facing the object,
at least a part of the first to fourth lens groups is provided to be movable, as a vibration-proof lens group for correcting an image blur, so as to have a component in a direction perpendicular to an optical axis,
the fourth lens group has at least four lenses, and
the following conditional expression is satisfied:

$$0.20 < fw/f2 < 0.55$$

where fw denotes a focal length of the zoom lens in a wide-angle end state, and
f2 denotes a focal length of the second lens group.

2. The zoom lens according to claim 1, wherein at least a part of the third lens group is provided to be movable, as the vibration-proof lens group, so as to have the component in the direction perpendicular to the optical axis.

3. The zoom lens according to claim 1, wherein the following conditional expression is satisfied:

$$1.00 < (ft/fw)/Fw < 2.00$$

where fw denotes a focal length of the zoom lens in a wide-angle end state,
ft denotes a focal length of the zoom lens in a telephoto end state, and
Fw denotes an open F-number in the wide-angle end state.

4. The zoom lens according to claim 1, wherein the following conditional expression is satisfied:

$$0.90 < ft/f2 < 1.50$$

where ft denotes a focal length of the zoom lens in a telephoto end state, and
f2 denotes a focal length of the second lens group.

5. The zoom lens according to claim 1, wherein the following conditional expression is satisfied:

$$0.50 < (-f1)/f2 < 0.80$$

where f1 denotes a focal length of the first lens group, and
f2 denotes a focal length of the second lens group.

6. The zoom lens according to claim 1, wherein the following conditional expression is satisfied:

$$0.80 < f2/(-f3) < 1.20$$

where f2 denotes a focal length of the second lens group, and
f3 denotes a focal length of the third lens group.

7. The zoom lens according to claim 1, wherein the third lens group comprises a cemented lens formed by cementing a positive lens and a negative lens.

8. The zoom lens according to claim 1, wherein the first lens group comprises, disposed in order from an object, a negative meniscus lens, a negative lens, and a positive lens.

9. The zoom lens according to claim 1, wherein the first lens group comprises at least one aspherical lens.

10. The zoom lens according to claim 1, wherein a lens of the first lens group on a side closest to the object is an aspherical lens.

11. The zoom lens according to claim 1, comprising a configuration in which focusing is made by moving at least a part of the second lens group along an optical axis direction.

12. The zoom lens according to claim 1, comprising an aperture stop between the second lens group and the third lens group.

13. The zoom lens according to claim 1, comprising:

an aperture stop, wherein
the aperture stop moves integrally with the third lens group upon zooming.

14. An imaging device, comprising the zoom lens according to claim 1.

15. A zoom lens, comprising: disposed in order from an object, a first lens group having negative refractive power; a second lens group having positive refractive power; a third lens group having negative refractive power; and a fourth lens group having positive refractive power, wherein
zooming is made by varying air distances between the lens groups, respectively,
the first lens group comprises a negative meniscus lens on a side closest to the object,
at least a part of the first lens group to the fourth lens group is provided to be movable, as a vibration-proof lens group for correcting an image blur, so as to have a component in a direction perpendicular to an optical axis,
the fourth lens group comprises at least three lenses, and
the following conditional expression is satisfied:

$$1.00 < (ft/fw)/Fw < 2.00$$

where fw denotes a focal length of the zoom lens in a wide-angle end state,
ft denotes a focal length of the zoom lens in a telephoto end state, and
Fw denotes an open F-number in the wide-angle end state.

16. An imaging device, comprising the zoom lens according to claim 15.

17. A method for manufacturing a zoom lens comprising:

disposed in order from an object, a first lens group having negative refractive power; a second lens group having positive refractive power; a third lens group having negative refractive power; and
a fourth lens group having positive refractive power, wherein

each lens is arranged within a lens barrel in such a manner that zooming is made by varying air distances between the lens groups, respectively,
the first lens group comprises, on a side closest to the object, a negative meniscus lens having a convex surface facing the object,
at least a part of the first lens group to the fourth lens group is provided to be movable, as a vibration-proof lens group for correcting an image blur, so as to have a component in a direction perpendicular to an optical axis,
the fourth lens group comprises at least four lenses, and the following conditional expression is satisfied:

$$0.20 < fw/f2 < 0.55$$

where fw denotes a focal length of the zoom lens in a wide-angle end state, and
f2 denotes a focal length of the second lens group.

18. The method for manufacturing the zoom lens according to claim 17, wherein the following conditional expression is satisfied:

$$1.00 < (ft/fw)/Fw < 2.00$$

where fw denotes a focal length of the zoom lens in a wide-angle end state,
ft denotes a focal length of the zoom lens in a telephoto end state, and
Fw denotes an open F-number in the wide-angle end state.

**19.** The method for manufacturing the zoom lens according to claim 17, wherein the following conditional expression is satisfied:

$$0.90 < ft/f2 < 1.50$$

where ft denotes a focal length of the zoom lens in a telephoto end state, and
f2 denotes a focal length of the second lens group.

**20.** The method for manufacturing the zoom lens according to claim 17, wherein the following conditional expression is satisfied:

$$0.50 < (-f1)/f2 < 0.80$$

where f1 denotes a focal length of the first lens group, and
f2 denotes a focal length of the second lens group.

**21.** The method for manufacturing a zoom lens according to claim 17, wherein the following conditional expression is satisfied:

$$0.80 < f2/(-f3) < 1.20$$

where f2 denotes a focal length of the second lens group, and
f3 denotes a focal length of the third lens group.

**22.** A method for manufacturing a zoom lens comprising:

disposed in order from an object, a first lens group having negative refractive power; a second lens group having positive refractive power; a third lens group having negative refractive power; and
a fourth lens group having positive refractive power, wherein

each lens is arranged within a lens barrel in such a manner that zooming is made by varying air distances between the lens groups, respectively,
the first lens group has a negative meniscus lens on a side closest to the object,
at least a part of the first lens group to the fourth lens group is provided to be movable, as a vibration-proof lens group for correcting an image blur, so as to have a component in a direction perpendicular to an optical axis,
the fourth lens group comprises at least three lenses, and
the following conditional expression is satisfied:

$$1.00 < (ft/fw)/Fw < 2.00$$

where fw denotes a focal length of the zoom lens in a wide-angle end state,
ft denotes a focal length of the zoom lens in a telephoto end state, and
Fw denotes an open F-number in the wide-angle end state.

**FIG.1**

(EXAMPLE 1)

(W)

(T)

∞ →

m7 m8

m1 m2 m3 m4 m5 m6

m9 m10 m11 m12 m13 m14 m15 m16 m17 m18 m19

m20 m21 m22 m23 m24 m25 m26 m27

ZL(ZL1)

S  FS1  FS2

L11 L12 L13
G1(−)

L21 L22 L23 L24
G2(+)

L31 L32
G3(−)

L41 L42 L43 L44 L45
G4(+)

EP 3 125 012 A1

# FIG.2A

FNO=1.89

Y=7.97

Y=7.97

0.500

SPHERICAL
ABERRATION

0.500

ASTIGMATISM

5.000

DISTORTION

-0.050

LATERAL CHROMATIC
ABERRATION

A=-42.02

A=-31.65

A=-23.68

A=-12.24

A=0.00

-0.050

COMA ABERRATION

# FIG.2B

Y=5.7

Y=0.0

Y=-5.7

COMA ABERRATION

# FIG.3

FNO=2. 41      Y=7. 97      Y=7. 97

A=-31. 06

A=-22. 73

A=-16. 61

A=-8. 47

A=0.00

0. 500      0. 500      5. 000

SPHERICAL ASTIGMATISM DISTORTION
ABERRATION

-0. 050

COMA ABERRATION

g

-0. 050

LATERAL CHROMATIC
ABERRATION

# FIG.4

FNO=3. 32

SPHERICAL
ABERRATION

0. 500

Y=7. 97

ASTIGMATISM

0. 500

Y=7. 97

DISTORTION

5. 000

LATERAL CHROMATIC
ABERRATION

-0. 050

A=-23. 42

A=-16. 85

A=-12. 20

A=-6. 17

A=0.00

-0. 050

COMA ABERRATION

# FIG.5A

FNO=4. 46

Y=7. 97

Y=7. 97

A=-15. 22

A=-10. 80

A=-7. 76

A=-3. 90

A=0.00

-0. 100

42. 000

4. 000

4. 000

SPHERICAL
ABERRATION

ASTIGMATISM

DISTORTION

COMA ABERRATION

-0. 050

LATERAL CHROMATIC
ABERRATION

# FIG.5B

Y=5.7

Y=0.0

Y=-5.7

COMA ABERRATION

FIG.6

(EXAMPLE 2)

# FIG.7A

PNO=2.00
Y=7.97
Y=7.97

A=-42.02

A=-31.65

A=-23.60

A=-12.25

A=0.00

-0.050

COMA ABERRATION

0.500
0.500
5.000

SPHERICAL ABERRATION
ASTIGMATISM
DISTORTION

-0.050

LATERAL CHROMATIC ABERRATION

# FIG.7B

Y=5.7

Y=0.0

Y=-5.7

COMA ABERRATION

# FIG.8

| FNO=2.50 | Y=7.97 | Y=7.97 |
| --- | --- | --- |
| 0.500 | 0.500 | 5.000 |
| SPHERICAL ABERRATION | ASTIGMATISM | DISTORTION |

-0.050

LATERAL CHROMATIC ABERRATION

A=-31.81

A=-23.17

A=-18.95

A=-8.64

A=0.00

-0.050

COMA ABERRATION

# FIG.9

FNO=3. 51  Y=7. 97  Y=7. 97

0. 500  0. 500  5. 000

SPHERICAL ABERRATION  ASTIGMATISM  DISTORTION

-0. 050

LATERAL CHROMATIC ABERRATION

A=-21. 72

A=-15. 57

A=-11. 25

A=-5. 68

A=0.00

-0. 050

COMA ABERRATION

## FIG.10A

FNO=4.50

SPHERICAL
ABERRATION

Y=7.97

ASTIGMATISM

Y=7.97

DISTORTION

0.500          0.500          5.000

-0.050

LATERAL CHROMATIC
ABERRATION

A=-15.20

A=-10.80

A=-7.76

A=-3.90

A=0.00

-0.050

COMA ABERRATION

## FIG.10B

Y=5.7

Y=0.0

Y=-5.7

COMA ABERRATION

FIG.11

(EXAMPLE 3)

# FIG.12A

FNO=2. 80

Y=7. 97

Y=7. 97

| SPHERICAL ABERRATION | ASTIGMATISM | DISTORTION |
|---|---|---|
| 0. 500 | 0. 500 | 5. 000 |

LATERAL CHROMATIC ABERRATION

-0. 050

A=-42. 02

A=-31. 63

A=-23. 56

A=-12. 24

A=0.00

-0. 050

COMA ABERRATION

# FIG.12B

Y=5.7

Y=0.0

Y=-5.7

COMA ABERRATION

# FIG.13

FNO=3. 13　　　Y=7. 97　　　Y=7. 97

A=-32. 61

d g

A=-23. 94

d g

A=-17. 54

d g

A=-8. 97

d g

A=0.00

d g

0. 500　　　0. 500　　　5. 000

-0. 050

SPHERICAL　　ASTIGMATISM　　DISTORTION
ABERRATION

COMA ABERRATION

g

-0. 050

LATERAL CHROMATIC
ABERRATION

# FIG.14

FNO=3. 74

SPHERICAL
ABERRATION
0. 500

Y=7. 97

ASTIGMATISM
0. 500

Y=7. 97

DISTORTION
5. 000

LATERAL CHROMATIC
ABERRATION
-0. 050

A=-24. 25
d g

A=-17. 47
d g

A=-12. 66
d g

A=-6. 41
d g

A=0.00
d g

-0. 050

COMA ABERRATION

# FIG.15A

FNO=5. 39

Y=7. 97

Y=7. 97

A=-15. 22

A=-10. 80

A=-7. 76

A=-3. 90

A=0.00

0. 500

0. 500

5. 000

-0. 050

SPHERICAL
ABERRATION

ASTIGMATISM

DISTORTION

COMA ABERRATION

-0. 050

LATERAL CHROMATIC
ABERRATION

# FIG.15B

Y=5.7

Y=0.0

Y=-5.7

COMA ABERRATION

# FIG.16

# FIG.17

START

↓

EACH LENS IS ARRANGED WITHIN A LENS BARREL IN SUCH A MANNER THAT A ZOOM LENS HAS, DISPOSED IN ORDER FROM AN OBJECT, A FIRST LENS GROUP G1 HAVING NEGATIVE REFRACTIVE POWER, A SECOND LENS GROUP G2 HAVING POSITIVE REFRACTIVE POWER, A THIRD LENS GROUP G3 HAVING NEGATIVE REFRACTIVE POWER, AND A FOURTH LENS GROUP G4 HAVING POSITIVE REFRACTIVE POWER, AND ZOOMING IS MADE BY VARYING AN AIR INTERVAL BETWEEN RESPECTIVE LENS GROUPS ⌇⌇ST110

↓

EACH LENS IS ARRANGED WITHIN THE LENS BARREL IN SUCH A MANNER THAT THE FIRST LENS GROUP G1 HAS A NEGATIVE MENISCUS LENS HAVING A CONVEX SURFACE FACING THE OBJECT ON A SIDE CLOSEST TO THE OBJECT ⌇⌇ST120

↓

AT LEAST A PART OF THE FIRST LENS GROUP G1 TO THE FOURTH LENS GROUP G4 IS PROVIDED TO BE MOVABLE, AS A VIBRATION-PROOF LENS GROUP FOR CORRECTING AN IMAGE BLUR, SO AS TO HAVE A COMPONENT IN A DIRECTION PERPENDICULAR TO AN OPTICAL AXIS ⌇⌇ST130

↓

EACH LENS IS ARRANGED WITHIN THE LENS BARREL IN SUCH A MANNER THAT THE FOURTH LENS GROUP G4 HAS AT LEAST FOUR LENSES ⌇⌇ST140

↓

EACH LENS IS ARRANGED WITHIN THE LENS BARREL IN SUCH A MANNER THAT A PREDETERMINED CONDITIONAL EXPRESSION IS SATISFIED ⌇⌇ST150

↓

END

# FIG.18

START

EACH LENS IS ARRANGED WITHIN A LENS BARREL IN SUCH A
MANNER THAT A ZOOM LENS HAS, DISPOSED IN ORDER FROM
AN OBJECT, A FIRST LENS GROUP G1 HAVING NEGATIVE
REFRACTIVE POWER, A SECOND LENS GROUP G2 HAVING
POSITIVE REFRACTIVE POWER, A THIRD LENS GROUP G3
HAVING NEGATIVE REFRACTIVE POWER, AND A FOURTH LENS
GROUP G4 HAVING POSITIVE REFRACTIVE POWER, AND
ZOOMING IS MADE BY VARYING AN AIR INTERVAL BETWEEN
RESPECTIVE LENS GROUPS
— ST210

EACH LENS IS ARRANGED WITHIN THE LENS BARREL IN SUCH
A MANNER THAT THE FIRST LENS GROUP G1 HAS A NEGATIVE
MENISCUS LENS ON A SIDE CLOSEST TO THE OBJECT
— ST220

AT LEAST A PART OF THE FIRST LENS GROUP G1 TO THE
FOURTH LENS GROUP G4 IS PROVIDED TO BE MOVABLE, AS A
VIBRATION-PROOF LENS GROUP FOR CORRECTING AN IMAGE
BLUR, SO AS TO HAVE A COMPONENT IN A DIRECTION
PERPENDICULAR TO AN OPTICAL AXIS
— ST230

EACH LENS IS ARRANGED WITHIN THE LENS BARREL IN SUCH
A MANNER THAT THE FOURTH LENS GROUP G4 HAS AT LEAST
THREE LENSES
— ST240

EACH LENS IS ARRANGED WITHIN THE LENS BARREL IN SUCH
A MANNER THAT A PREDETERMINED CONDITIONAL
EXPRESSION IS SATISFIED
— ST250

END

## INTERNATIONAL SEARCH REPORT

International application No.

PCT/JP2015/001719

### A. CLASSIFICATION OF SUBJECT MATTER
*G02B15/20*(2006.01)i, *G02B13/18*(2006.01)i

According to International Patent Classification (IPC) or to both national classification and IPC

### B. FIELDS SEARCHED

Minimum documentation searched (classification system followed by classification symbols)
G02B15/20, G02B13/18

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br><br>A | JP 2010-217535 A (Nikon Corp.),<br>30 September 2010 (30.09.2010),<br>entire text (particularly, example 1)<br>& US 2010/0238560 A1 | 1-2,4-5,<br>7-14,17,<br>19-20<br>3,6,15-16,<br>18,21-22 |
| X<br><br>A | JP 2011-215600 A (Nikon Corp.),<br>27 October 2011 (27.10.2011),<br>entire text (particularly, example 1)<br>& US 2012/0026589 A1 | 1-2,4-5,<br>7-14,17,<br>19-20<br>3,6,15-16,<br>18,21-22 |
| X<br><br>A | JP 2009-8845 A (Konica Minolta Opto, Inc.),<br>15 January 2009 (15.01.2009),<br>entire text (particularly, example 1)<br>& US 2009/0002842 A1 | 1,3,7,9-10,<br>14-18,22<br>2,4-6,8,<br>11-13,19-21 |

☒ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>09 June 2015 (09.06.15) | Date of mailing of the international search report<br>23 June 2015 (23.06.15) |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

| International application No. |
|---|
| PCT/JP2015/001719 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 2005-107036 A (Nikon Corp.), 21 April 2005 (21.04.2005), | 1,3-4,6-19, 21-22 |
| A | entire text (particularly, example 3) (Family: none) | 2,5,20 |
| X | JP 2005-49843 A (Nikon Corp.), 24 February 2005 (24.02.2005), | 1,3-4,6-19, 21-22 |
| A | entire text (particularly, example 1) & US 2005/0013015 A1 & CN 1576942 A & CN 101231381 A | 2,5,20 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1039210 A

- JP 2010170063 A